# EUROPÄISCHE PATENTSCHRIFT

(11) **EP 0 990 218 B1**
(45) Veröffentlichungstag und Bekanntmachung des Hinweises auf die Patenterteilung: **18.12.2002**
(21) Anmeldenummer: 98934966.7
(22) Anmeldetag: 17.06.1998
(51) Int. Cl.: G06F 17/21, G06K 1/12, G06K 15/00

(54) **VERFAHREN ZUM SELEKTIVEN ERFASSEN UND AUSLESEN EINER ZEICHENKETTE**
METHOD FOR SELECTIVELY DETECTING AND READING A CHARACTER STRING
PROCEDE DE SAISIE ET DE LECTURE SELECTIVES D'UNE CHAINE DE SIGNES

(30) Priorität: 18.06.1997 DE 19725790
(43) Veröffentlichungstag der Anmeldung: 05.04.2000
(73) Patentinhaber: Gert Fisher Gmbh, 41564 Kaarst (DE)
(72) Erfinder: FISCHER, Gert, D-41564 Kaarst (DE)
(74) Vertreter: Schmidt, Frank-Michael, Dr.-Ing.
(86) Internationale Anmeldenummer: EP9803644
(87) Internationale Veröffentlichungsnummer: WO98058341

(56) Entgegenhaltungen:
- EP-A- 0 627 703
- DE-A- 4 309 750
- US-A- 4 712 929
- US-A- 5 075 875
- PATENT ABSTRACTS OF JAPAN vol. 097, no. 003, 31. März 1997 & JP 08 290625 A (FUJI XEROX CO LTD), 5. November 1996

## Beschreibung

Die Erfindung betrifft ein Verfahren zum selektiven Erfassen und Auslesen wenigstens einer Zeichenkette, wobei die wenigstens eine Zeichenkette einer Datenverarbeitungseinrichtung eingegeben und in einen an einer Ausgabeschnittstelle der Datenverarbeitungseinrichtung ausgegebenen primären Ausgabesignalstrom eingebunden wird, wobei die Anzahl der Zeichen jeder Zeichenkette jeweils eine vorgegebene Maximalanzahl nicht übersteigt und wobei jeder Zeichenkette Positionssteuersignale zugeordnet und in einen vorgegebenen Abschnitt des primären Ausgabesignalstroms eingefügt werden, wobei die Positionssteuersignale eine an die Ausgabeschnittsteile ankoppelbare primäre Ausgabeeinrichtung veranlassen können, die jeweils zugeordnete Zeichenkette an einer vorgegebenen Ausgabeposition eines Ausgabemediums auszugeben.

Datenverarbeitungseinrichtungen unterschiedlichster Bauart und Größe werden in großem Umfang für unterschiedlichste Aufgaben eingesetzt, beispielsweise zum Steuern und Überwachen von Einrichtungen, Anlagen und automatisiert ablaufenden Verfahren, für Büro- und Kommunikationsaufgaben, in der Forschung und Entwicklung sowie im Unterhaltungsbereich. Zur Ausgabe der verarbeiteten Daten werden eine Vielzahl unterschiedlichster Datenverarbeitungseinrichtungen mit unterschiedlichen Daten-Ausgabeeinrichtungen gekoppelt. Die Datenverarbeitungseinrichtungen umfassen beispielsweise Großrechner, PC's, Mini- und Mikrocomputer aber auch Steuer- und Regeleinrichtungen. Ausgabeeinrichtungen können Anzeigeeinrichtungen, wie Kathodenstrahlröhren oder LCD-Displays, oder auch Drucker oder Plotter sein. Die Ausgabeeinrichtungen sind an einer Schnittstelle mit der Datenverarbeitungseinrichtung gekoppelt. Die Schnittstelle kann eine Standardschnittstelle, beispielsweise eine parallele Centronics-Schnittstelle oder eine serielle RS-232-Schnittstelle sein. Die Ausgabeschnittstelle der Datenverarbeitungseinrichtung muß dabei an die Eingabeschnittstelle der Ausgabeeinrichtung angepaßt sein. Hinsichtlich der Hardware bedeutet dies zunächst, daß die von der Datenverarbeitungseinrichtung an der Ausgabeschnittstelle ausgegebenen Signale hinsichtlich ihrer Spannungs- und Strompegel und hinsichtlich der zeitlichen Vorgaben an die Erfordernisse der Ausgabeeinrichtung angepaßt sein müssen. Darüber hinaus sind die seriell oder parallel ausgegebenen Signalfolgen auch in ihrer logischen Bedeutung, beispielsweise hinsichtlich der verwendeten Kodierung, der verwendeten Steuersignale und des verwendeten Protokolls, an die Erfordernisse der Ausgabeeinrichtung anzupassen.

Eine überwiegende Anzahl von Datenverarbeitungseinrichtungen kann Zeichenketten empfangen, verarbeiten und ausgeben. Unter einer Zeichenkette soll eine Folge von kodierten Zeichen verstanden werden. Ein Zeichen kann beispielsweise ein Schriftzeichen (Buchstabe, Zahl, Sonderzeichen) oder ein Pseudo-Grafik-Zeichen sein. Üblicherweise werden Zeichen mit Hilfe einer vorgegebenen Anzahl von Bits kodiert, wobei die Anzahl der Bits die Anzahl der durch den Kode kodierbaren unterschiedlichen Zeichen bestimmt. Es gibt eine Reihe von Standard-Kodes zum Kodieren der gebräuchlichsten Zeichen, beispielsweise den ASCII-Kode oder den ANSI-Kode.

Die Mehrheit der vorhandenen Ausgabeeinrichtungen kann Signalströme serieller oder paralleler Schnittstellen empfangen und zur Ausgabe verarbeiten, die Zeichenketten eines Standardkodes enthalten. Daneben benötigen die meisten Ausgabeeinrichtungen Signale, die die Positionierung der auszugebenen Zeichnen auf einem Ausgabemedium steuern. Bei einem Drucker sind dies beispielsweise Zeichen, die den Anfang einer neuen Seite, einer neuen Zeile oder einer bestimmten Position in der Zeile, sowie die verwendete Schriftart, Zeichengröße oder Farbe angeben. Anzeigedisplays erfordern Signale, die beispielsweise die Position der auszugebenden Zeichen auf dem Bildschirm oder das Löschen des Bildschirms anzeigen. Die verschiedenen bekannten Ausgabeeinrichtungen (Drucker, Displays) verwendet eine große Anzahl unterschiedlichster Steuersignale und Steuersignalfolgen.

Häufig ist es erforderlich, bei einer vorhandenen Datenverarbeitungseinrichtung die angekoppelte Ausgabeeinrichtung gegen eine neuere auszutauschen oder eine weitere Ausgabeeinrichtung hinzuzufügen. Dann tritt oftmals das Problem auf, daß die von der Datenverarbeitungseinrichtung unter Steuerung der auf der Datenverarbeitungseinrichtung abgearbeiteten Programme von der Ausgabeschnittstelle ausgegebenen Steuersignale nicht mehr von der neuen oder zusätzlichen Ausgabeeinrichtung vollständig und richtig interpretiert werden können. Selbst bei Verwendung einer Standard-Hardware-Schnittstelle mit den gleichen Signalpegeln und zeitlichen Signalabläufen wird in der Regel nur noch ein Teil der übertragenen Zeichen von der Ausgabeeinrichtung richtig interpretiert. Insbesondere die zur Formatierung und Positionierung der ausgegebenen Zeichen verwendeten Steuersignale können oftmals von der neuen oder zusätzlichen Ausgabeeinrichtung nicht mehr richtig interpretiert werden.

Ähnliche Probleme treten dann auf, wenn parallel zu oder in Ersatz einer vorhandenen Ausgabeeinrichtung eine andere Ausgabeeinrichtung an die Datenverarbeitungseinrichtung angekoppelt werden soll, die nur noch einen Teil der ausgegebenen Zeichenketten weiterverarbeiten und ausgeben soll. Ein typisches Beispiel dafür ist die Ankopplung eines Druckers zum Drucken von Adreßaufklebern parallel zu einem Serienbriefe ausdruckenden Drucker. Der Adreßaufkleber-Drucker soll aus dem von der Datenverarbeitungseinrichtung an den Briefdrucker ausgegebenen Ausgabesignalstrom nur die im Briefkopf befindlichen Adreßbestandteile herausfiltern und auf einen Adreßaufkleber drucken. Die übrigen Daten soll er ignorieren.

Aufgabe der Erfindung ist es daher, Zeichenketten in einem Ausgabesignalstrom einer Datenverarbeitungseinrichtung selektiv erfassen und auslesen zu können, ohne daß ein nachträglicher Eingriff in die vorhandene Software der Datenverarbeitungseinrichtung erforderlich ist und ohne daß der Benutzer Kenntnisse über die den Ausgabesignalstrom erzeugende Software haben muß.

Diese Aufgabe wird erfindungsgemäß durch ein Verfahren mit den Merkmalen des Patentanspruchs 1 gelöst. Die selektiv zu erfassenden und auszulesenden Zeichenketten sind die einer Datenverarbeitungseinrichtung im normalen Betrieb eingegebenen Zeichenketten, die in einen an einer Ausgabeschnittstelle der Datenverarbeitungseinrichtung ausgegebenen primären Ausgabesignalstrom eingebunden werden. Die Anzahl der Zeichen jeder Zeichenkette übersteigt eine vorgegebene Maximalanzahl nicht. Das Eingeben der Zeichenketten und das Einbinden in den primären Ausgabesignalstrom wird üblicherweise durch die auf der Datenverarbeitungseinrichtung ablaufenden Programme gesteuert. Unter einer Zeichenkette wird sowohl die Eingabefolge eines Bedieners, die beispielsweise auf einer Eingabemaske eines Bildschirms der Datenverarbeitungseinrichtung sichtbar gemacht wird, als auch die daraus erzeugte sequentielle Ausgabesignalfolge an der Ausgabeschnittstelle verstanden. Die Zeichenkette muß nicht durch einen Bediener in die Datenverarbeitungseinrichtung eingegeben werden; sie kann auch durch eine Ausgabe eines auf der Datenverarbeitungseinrichtung oder einer anderen Einrichtung ablaufenden Programms in einen Eingabebereich gelangen. Unter einer Datenverarbeitungseinrichtung soll jede Einrichtung bzw. jeder Teil einer Einrichtung verstanden werden, der bzw. dem eine Zeichenfolge in kodierter Form eingegeben werden kann und die bzw. der diese Zeichenfolge, möglicherweise unter Änderung der Kodierung, an einer Ausgabeschnittstelle ausgibt. Die Maximalanzahl der Zeichen jeder Zeichenkette wird durch die auf der Datenverarbeitungseinrichtung ablaufende Software vorgegeben und wird beispielsweise durch die Breite eines in einer Eingabemaske eines Bildschirms sichtbaren Eingabefeldes angezeigt. Jeder Zeichenkette werden Positionssteuersignale zugeordnet und in einen vorgegebenen Abschnitt des primären Ausgabesignalstroms eingefügt, wobei die Positionssteuersignale eine an die Ausgabeschnittstelle ankoppelbare primäre Ausgabeeinrichtung veranlassen können, die jeweils zugeordnete Zeichenkette an einer vorgegebenen Ausgabeposition eines Ausgabemediums auszugeben. Der vorgegebene Abschnitt des primären Ausgabesignalstroms ist beispielsweise derjenige Abschnitt, der eine Seite eines Bildschirms oder eines Druckers beschreibt und der durch ein entsprechendes Steuersignal eingeleitet oder beendet wird. Das Ausgabemedium ist beispielsweise eine bedruckte Seite oder ein Etikett oder eine Bildschirmseite. Die Positionssteuersignale sind jene Steuersignale, die die Ausgabeposition einer Zeichenkette auf dem Ausgabemedium beeinflussen können. Daneben können weitere Steuersignale in den Ausgabesignalstrom eingebunden werden, die z.B. die Darstellungsart der Zeichen steuern.

Das erfindungsgemäße Verfahren ist dadurch gekennzeichnet, daß eine an die Ausgabeschnittstelle der Datenverarbeitungseinrichtung angekoppelte Konvertiereinrichtung in einen Konfiguriermodus versetzt wird, wobei in dem Konfiguriermodus der Datenverarbeitungseinrichtung anstelle jeder Zeichenkette, die selektiv erfaßt werden soll, eine Markierungszeichenkette eingegeben wird. Jede Markierungszeichenkette bildet eine einmalige Folge von Zeichen, die in dem während des normalen Betriebs ausgegebenen primären Ausgabesignalstrom nicht auftritt. Die Anzahl der Zeichen der Markierungszeichenkette ist gleich der Maximalanzahl der Zeichen der zugehörigen Zeichenkette. Vorteilhaft ist dabei, daß zur Eingabe der Markierungszeichenkette das üblicherweise auf der Datenverarbeitungseinrichtung ablaufende Programm verwendet werden kann. Die Markierungszeichenkette wird an der von dem Programmablauf vorgesehenen Stelle (beispielsweise in die angezeigte Eingabemaske) wie eine normale Zeichenkette eingegeben. Anschließend gelangt jede Markierungszeichenkette (gesteuert durch das vorhandene Programm) mit zugeordneten Positionssteuersignalen in den primären Ausgabesignalstrom der Datenverarbeitungseinrichtung. Von der Konvertiereinrichtung wird der primäre Ausgabesignalstrom empfangen und nach Markierungszeichenketten durchsucht, wobei bei Erfassen einer Markierungszeichenkette eine deren Anfangsort im primären Ausgabesignalstrom kennzeichnende Positionsinformation aus dem der jeweiligen Markierungszeichenkette zugeordneten, in dem vorgegebenen Abschnitt des primären Ausgabesignalstroms eingefügten Positionssteuersignalen gewonnen und zusammen mit der Anzahl der Zeichen der Markierungszeichenkette in der Konvertiereinrichtung gespeichert wird. Da die Länge der Markierungszeichenkette gleich der Maximallänge jener Zeichenkette ist, die sie im Konfiguriermodus ersetzt, wird durch das Abspeichern der Länge und der den Anfangsort der Markierungszeichenkette kennzeichnenden Positionsinformation gleichzeitig auch eine Information über das Ende der Markierungszeichenkette gespeichert.

Danach wird die Konvertiereinrichtung in einen Betriebsmodus gebracht, in welchem der primäre Ausgabesignalstrom empfangen, aus den empfangenen Positionssteuersignalen eine aktuelle Positionsinformation gewonnen, die aktuelle Positionsinformation mit jeder der gespeicherten Positionsinformationen verglichen und bei Übereinstimmung der aktuellen Positionsinformation mit einer der gespeicherten Positionsinformationen die zugehörige Zeichenkette aus dem primären Ausgabesignalstrom ausgelesen wird. Die im Konfiguriermodus "angelernte" Positionsinformation für die jeweilige Zeichenkette wird im Betriebsmodus verwendet, um eine beliebige Zeichenkette an dem so markierten Ort des primären Ausgabesignalstroms zu erfassen und herauszulesen. Die Konvertiereinrichtung "konventiert" den empfangenen Ausgabesignalstrom in einem "Strom" selektiv ausgelesener Zeichenketten. Die herausgelesenen Zeichenketten können anschließend von der Konvertiereinrichtung ausgegeben oder in der Konvertiereinrichtung weiterverarbeitet werden. Mit Hilfe des erfindungsgemäßen Verfahrens ist es möglich, eine beliebige Zeichenkette, die stets in Zuordnung zu derselben Positionsinformation auftritt, aus einem Ausgabesignalstrom herauszulesen, ohne Kenntnisse über die den Ausgabesignalstrom erzeugende Software zu besitzen. Es sind keine Kenntnisse über die verwendeten Steuersignale erforderlich. Bei einer wiederholten Ausgabe unterschiedlicher Zeichenketten in Zuordnung zu der gleichen Positionsinformation (beispielsweise bei einer Serienbriefausgabe mit wechselnden Adressen im Anschriftenfeld der Briefe) liest die Konvertiereinrichtung jedesmal die zugehörigen Zeichenketten selektiv aus.

Bei einer Weiterbildung des erfindungsgemäßen Verfahrens wird von dem vorgegebenen Abschnitt des primären Ausgabesignalstroms eine Seite eines zweidimensionalen Ausgabemediums definiert. Der Begriff "Seite" soll im weitesten Sinne neben sämtlichen Papierseitenformaten eines Druckers auch Seiten von der Größe eines Etiketts oder Bildschirmseiten, im Extremfall auch eine einzelne Ausgabezeile umfassen. Außerdem werden von den der zu erfassenden Zeichenkette in dem vorgegebenen Abschnitt vorangestellten Positionssteuersignalen Zeilen und Spalten der Seite definiert, wobei die Ausgabeposition eines Zeichens der Zeichenkette durch eine Spaltennummer und eine Zeilennummer eindeutig festgelegt wird. Im Konfiguriermodus werden zu jeder Markierungszeichenkette eine Spaltennummer und eine Zeilennummer als Positionsinformation gespeichert. Diese Ausführungsform des erfindungsgemäßen Verfahrens eignet sich für alle Ausgabeeinrichtungen, die Zeichen ausschließlich in fest vorgegebenen Zeilen und innerhalb der Zeilen an fest vorgegebenen Positionen (Spalten) ausgeben, beispielsweise alphanumerische Terminals sowie eine Vielzahl herkömmlicher Drucker. Vorzugsweise entsprechen die als Positionsinformation gespeicherten Zeilenund Spaltennummern den Ausgabepositionen der jeweils ersten Zeichen der Markierungszeichenketten. Somit entsprechen sie auch der Ausgabeposition des jeweiligen ersten Zeichens der zugehörigen Zeichenketten im Betriebsmodus. Im Betriebsmodus werden aus den empfangenen Positionssteuersignalen und Zeichenketten jeweils eine aktuelle Zeilennummer und eine aktuelle Spaltennummer als aktuelle Positionsinformation gewonnen. Bei Überstimmung der aktuellen Zeilen-/Spaltennummern mit den gespeicherten Zeilen-/Spaltennummern werden die nachfolgenden Zeichen aus dem Ausgabesignalstrom solange ausgelesen, bis entweder die Maximalanzahl der Zeichen der Zeichenkette erreicht oder ein Zeichenkettenende-Signal erfaßt wird. Das Zeichenkettenende-Signal kann beispielsweise ein Steuersignal zur Zeilenschaltung oder ein Tabulator-Steuersignal sein. Die aus der Zeilennummer und der Spaltennummer gewonnene Positionsinformation kann eine Verkettung der beiden Nummern oder eine aus den beiden Nummern errechnete Binärzahl sein. Vorzugsweise werden als Positionsinformation die Zeilen- und die Spaltennummer jeweils in separaten Zählregistern gespeichert. Wenn die Positionssteuersignale solche Signale umfassen, von denen der Beginn einer neuen Seite oder einer neuen Zeile angezeigt wird, so werden bei dem bevorzugten Ausführungsbeispiel ein Zeilenzähler bzw. ein Spaltenzähler entsprechend zurückgesetzt, sobald ein den Beginn einer neuen Seite bzw. einer neuen Zeile anzeigendes Positionssteuersignal erfaßt wird.

Vorteilhafterweise werden in der Konvertiereinrichtung im Konfiguriermodus jeweils die zu einer Seite des Ausgabemediums gehörenden Positionssteuersignale und Zeichenketten zwischengespeichert. Dann werden die zwischengespeicherten Zeichenketten nach Markierungszeichenketten durchsucht. Bei Auffinden einer Markierungszeichenkette werden aus den vorangestellten Positionssteuersignalen und Zeichenketten der Seite die als Positionsinformation zu speichernde Zeilennummer und die zu speichernde Spaltennummer gewonnen. Vorzugsweise werden zunächst die der Markierungszeichenkette vorangestellten Positionssteuersignale und Zeichenketten solange durchsucht, bis ein den Anfang bzw. das Ende einer Zeile anzeigendes Signal aufgefunden wurde. Dabei wird beim Überschreiten jedes der Markierungszeichenkette vorangestellten Zeichens ein Spaltenzähler inkrementiert. Anschließend werden die der Markierungszeichenkette vorangestellten Positionssteuersignale solange durchsucht, bis ein den Seitenanfang anzeigendes Zeichen gefunden wird. Dabei wird bei Überschreiten jedes eine Zeilenschaltung bewirkenden Zeichens ein Zeilenzähler inkrementiert. Die sich ergebenden Zählerstände werden als Positionsinformation gespeichert.

Bei einer Weiterbildung der Erfindung weist die Konvertiereinrichtung zwei Seitenspeicher auf. Die eine folgende Seite des Ausgabemediums bildenden Abschnitte des primären Ausgabesignalstroms werden in einen Seitenspeicher zwischengespeichert. Gleichzeitig werden die in dem anderen Seitenspeicher der Konvertiereinrichtung zwischengespeicherten, die vorhergehende Seite des Ausgabemediums bildenden Abschnitte des primären Ausgabesignalstroms im Konfiguriermodus nach Markierungszeichenketten durchsucht und aus den zwischengespeicherten Abschnitten die Positionsinformationen gewonnen.

Bei einem alternativen Ausführungsbeispiel des erfindungsgemäßen Verfahrens wird zu jeder Zeichenkette eine eindeutig zugeordnete Teilsequenz von Positionssteuersignalen in den vorgegebenen Abschnitt des primären Ausgabesignalstroms eingefügt, wobei es der Ausgabeeinrichtung mit Hilfe der Teilsequenz von Positionssteuersignalen ermöglicht wird, die Ausgabeposition der Zeichenkette zu bestimmen. Im Konfiguriermodus wird der vorgegebene Abschnitt des primären Ausgabesignalstroms zwischengespeichert und die einer Markierungszeichenkette in dem vorgegebenen Abschnitt zugeordnete Teilsequenz verwendet, um die zugehörige Positionsinformation zu gewinnen. Im Betriebsmodus wird die einer Zeichenkette zugeordnete Teilsequenz verwendet, um die aktuelle Positionsinformation zu gewinnen. Diese Ausführungsform des erfindungsgemäßen Verfahrens findet bei solchen Ausgabeeinrichtungen Anwendung, die einen Signalstrom von der Datenverarbeitungseinrichtung empfangen, aus dem sich keine Zeilen- und Spalteninformationen durch "Mitzählen" entsprechender Steuersignale gewinnen lassen. Diese Ausgabeeinrichtungen, beispielsweise einige Thermotransferdrucker für Etiketten, empfangen Steuersequenzen, in denen eine Position einer Zeichenkette in einem speziellen Befehl kodiert ist. Beispielsweise empfangen derartige Drucker einen Signalstrom in Form einer Sequenz von Programmbefehlen einer speziellen Druckerprogrammiersprache. Die Programmbefehle enthalten Steuerbefehle, die die Position einer bestimmten Ausgabe festlegen, Befehle, die den Inhalt der Ausgabe, beispielsweise den Inhalt einer Zeichenkette, wiedergeben und Befehle, die schließlich den Beginn des Ausdrucks und die Anzahl der Kopien festlegen. In einem solche Falle erzeugt erst die Software der Ausgabeeinrichtung aus der ihr übermittelten Programmsequenz die Orte, Formate und Inhalte der auszugebenden Zeichenketten. Bei dieser Ausführungsform des erfindungsgemäßen Verfahrens wird im Konfiguriermodus der zwischengespeicherte vorgegebene Abschnitt des primären Ausgabesignalstroms nach Erfassen einer Markierungszeichenkette (z.B. in einem Befehl) nach der zugeordneten, positionskennzeichnenden Teilsequenz durchsucht, wobei entweder Informationen einer relativen Lage der Teilsequenz in bezug auf die Markierungszeichenkette oder Kenntnisse über das Auftreten vorgegebener Steuersignale innerhalb der Teilsequenz verwendet werden können. Diese Kenntnisse über die relative Lage oder bestimmte fixierte Inhalte der positionskennzeichnenden Teilsequenz werden vorzugsweise im Konfiguriermodus gewonnen ("angelernt"), indem in einen vorgegebenen Abschnitt des primären Ausgabesignalstroms einerseits mehrere verschiedene Markierungszeichenketten eingebunden werden, andererseits in aufeinanderfolgenden vorgegebenen Abschnitten des primären Ausgabesignalstroms gleiche Markierungszeichenketten an unterschiedlichen Orten eingebunden werden.

Bei einer bevorzugten Ausführungsform ist die Teilsequenz der Zeichenkette unmittelbar vorangestellt oder ihr unmittelbar angehängt. Dann kann ein Abschnitt der Teilsequenz selbst als Positionsinformation gespeichert werden. Dieser Abschnitt enthält beispielsweise eine Identifizierungszeichenkette, die der Position der jeweiligen Markierungszeichenkette im Konfiguriermodus bzw. der auszulesenden Zeichenkette im Betriebsmodus eindeutig zugeordnet ist. Die Identifizierungszeichenkette ist beispielsweise eine der Zeichenkette zugeordnete laufende Nummer. Zusätzlich kann der als Positionsinformation gespeicherte Abschnitt der Teilsequenz einen Steuerkode für einen Ausgabebefehl umfassen, der die Ausgabeeinrichtung veranlaßt, bei Dekodieren des Druckerbefehls die im Druckerbefehl durch die Identifizierungsnummer bezeichnete Zeichenkette auszugeben. Da der Druckerbefehl in Zuordnung zu dieser Identifizierungsnummer nur einmal in dem jeder Seite des Ausgabemediums zugeordneten Abschnitt des primären Ausgabesignalstroms auftritt, ist er als Positionsinformation geeignet.

Bei einer bevorzugten Ausführungsform wird die Teilsequenz der Zeichenkette unmittelbar vorangestellt, wobei im Betriebsmodus die empfangenen Positionssteuersignale kontinuierlich mit jeder gespeicherten Teilsequenz verglichen werden und bei Erfassen einer Überstimmung die der Teilsequenz unmittelbar folgenden Zeichen solange aus den zwischengespeicherten Abschnitten des primären Ausgabesignalstroms ausgelesen werden, bis die der Teilsequenz zugeordnete Maximalanzahl der Zeichen der Zeichenkette erreicht oder ein Zeichenkettenende-Signal erfaßt wird.

Die Markierungszeichenkette ist vorzugsweise wenigstens vier Zeichen lang und enthält wenigstens ein Zeichen, das die jeweilige Maximalanzahl der Zeichen der Markierungszeichenkette darstellt. Die verbleibenden Zeichen der Markierungszeichenkette sind vorzugsweise identisch, aber verschieden von den Zeichen jeder anderen Markierungszeichenkette. Bei einem bevorzugten Ausführungsbeispiel stellen das zweite und das dritte Zeichen der Markierungszeichenkette die Maximalanzahl der Zeichen und die verbleibenden Zeichen beliebige Buchstaben dar. Eine Markierungszeichenkette zum Markieren einer Zeichenkette mit 10 Zeichen lautet beispielsweise: "A10AAAAAAA". Die Eingabe einer solchen Markierungszeichenkette ist nahezu bei sämtlichen in Frage kommende Anwendungsfällen von auf der vorhandenen Datenverarbeitungseinrichtung abgearbeiteten Programmen möglich. Eine solche Zeichenkette tritt auch im normalen Betrieb mit sehr geringer Wahrscheinlichkeit auf. Darüber hinaus enthält die Markierungszeichenkette redundante Informationen über: ihre Länge. Sollte insbesondere bei kurzen Markierungszeichenketten von vier, fünf oder sechs Zeichen Länge der Fall eintreten, daß neben einer derartige Markierungszeichenkette eine identische Zeichenkette im "normalen" verbleibenden Ausgabesignalstrom auftritt, so braucht der Bediener bloß den verwendeten Buchstaben zu wechseln, beispielsweise den seltenen Buchstaben "Y" einzugeben, um eine erfaßbare, einzigartige Markierungszeichenkette zu schaffen.

Bei einer bevorzugten Weiterbildung des erfindungsgemäßen Verfahrens wird die Zeichenkette aus dem primären Ausgabesignalstrom nicht nur selektiv ausgelesen, sondern es wird nach dem Auslesen von der Konvertiereinrichtung ein von der wenigstens einen ausgelesenen Zeichenkette abhängiger sekundärer Ausgabesignalstrom an eine an einer Ausgabeschnittstelle angekoppelte sekundäre Ausgabeeinrichtung ausgegeben. Bei diesem Verfahren wird im Grunde genommen ein empfangener primärer Ausgabesignalstrom in einen sekundären Ausgabesignalstrom konvertiert. Bestimmte, im primären Ausgabesignalstrom enthaltene Informationen werden erfaßt und verarbeitet und es wird ein von diesen Informationen abhängiger sekundärer Ausgabesignalstrom erzeugt. Beispielsweise kann die Konvertiereinrichtung in Abhängigkeit vom Inhalt einer ausgelesenen Zeichenkette eine zuvor in der Konvertiereinrichtung abgespeicherte Information abrufen und in den sekundären Ausgabesignalstrom einbinden. Dies kann beispielsweise mit Hilfe einer Nachschlagetabelle geschehen, in der die möglicherweise auslesbare Zeichenketten jeweils den im sekundären Ausgabesignalstrom auszugebenden Informationen zugeordnet sind.

Bei einer bevorzugten Weiterbildung des erfingungsgemäßen Verfahrens enthält der sekundäre Ausgabesignalstrom Signale, die die sekundäre Ausgabeeinrichtung zur Ausgabe einer von der ausgelesenen Zeichenkette abhängigen Zeichenfolge veranlassen. Mit diesem Verfahren ist es beispielsweise möglich, die von der Datenverarbeitungseinrichtung ausgegebenen Zeichenketten auf einem Drucker auszugeben, der ausschließlich graphische Pixeldaten empfangen kann. Die Konvertiereinrichtung liest beispielsweise die auszugebende Zeichenkette selektiv aus und ordnet jedem ausgelesenen Zeichen entsprechende Pixeldaten zu. Dann werden die Pixeldaten an entsprechende Speicherplätze in einem Ausgabespeicher positioniert, so daß sie eine grafische Zeichenkette bilden. Dann kann der Ausgabespeicher pixelweise an den Grafikdrucker ausgelesen werden.

Bei einem anderen Ausführungsbeispiel kann der sekundäre Ausgabesignalstrom auch die ausgelesene Zeichenkette in einem Zeichenkode enthalten. Auch Mischformen der beiden Verfahren sind denkbar, bei denen der sekundäre Ausgabesignalstrom die ausgelesene Zeichenketten sowohl als Zeichenkodefolge als auch als graphische Pixeldaten enthält.

Bei einer Weiterbildung des erfindungsgemäßen Verfahrens wird im Konfiguriermodus zu jeder gespeicherten Positionsinformation neben der Zeichenanzahl der Markierungszeichenkette (= Maximalanzahl der Zeichen einer Zeichenkette) eine Ausgabeinformation zugeordnet und gespeichert. Die Ausgabeinformation definiert den Inhalt und den Ort der Ausgabe der von der ausgelesenen Zeichenkette abhängigen Zeichenfolge. Damit ist es möglich, jeder ausgelesenen Zeichenkette individuelle Informationen über die Zeichenfolge des sekundären Ausgabesignalstroms zuzuordnen. Die Ausgabeinformation definiert hinsichtlich des Inhalts der Zeichenfolge beispielsweise, ob die Zeichenfolge identisch mit der ausgelesenen Zeichenfolge ist oder welche Abschnitte der ausgelesenen Zeichenfolge in den sekundären Ausgabesignalstrom überführt werden sollen. Hinsichtlich des Orts der Ausgabe der Zeichenfolge werden beispielsweise Zeilen und Spalten oder andere zweidimensionale Koordinatenangaben eines Ausgabemediums definiert.

Vorzugsweise wird der sekundäre Ausgabesignalstrom aus in einem Ausgabespeicher der Konvertiereinrichtung gespeicherten Ausgabedaten gebildet. Die zuvor aus dem primären Ausgabesignalstrom ausgelesenen Zeichenketten werden als Teil der Ausgabedaten (vor dem Bilden des sekundären Ausgabesignalstroms) in vorgegebene Ausgabespeicherorte des Ausgabespeichers eingeschrieben. Im Konfiguriermodus wird jeder gespeicherten Positionsinformation als Ausgabeinformation wenigstens ein vorgegebener Ausgabespeicherort zugeordnet. Der Ausgabespeicherort wird im Konfiguriermodus vorzugsweise dadurch zugeordnet, daß an dem wenigstens einen vorgegebenen Ausgabespeicherort eine Musterzeichenkette gespeichert wird, wobei die Musterzeichenkette in einer vorgegebenen Relation zu der der gespeicherten Positionsinformation zugeordneten Markierungszeichenkette steht. Anschließend wird der Ausgabespeicher jeweils nach dem Erfassen einer Markierungszeichenkette nach Musterzeichenketten durchsucht, und bei Auffinden einer Musterzeichenkette deren Ausgabespeicherort in Zuordnung zur Positionsinformation gespeichert. Die Musterzeichenkette und die zugeordnete Markierungszeichenkette stellen vorzugsweise identische Zeichenfolgen dar. Bei alternativen Ausführungsformen ist es aber beispielsweise denkbar, daß die Musterzeichenkette Kleinbuchstaben eines Alphabets darstellt, während die zugeordnete Markierungszeichenkette die identischen Großbuchstaben darstellt.

Das Gewinnen der Ausgabeinformation über den Ausgabeort mit Hilfe der Musterzeichenkette im Konfiguriermodus geschieht auf eine ähnliche Weise wie das Gewinnen einer Markierungszeichenkette zugeordneten Positionsinformation. In beiden Fällen wird eine Zeichenkette verwendet, die im übrigen primären Ausgabesignalstrom bzw. im übrigen sekundären Ausgabesignalstrom nicht bzw. mit sehr geringer Wahrscheinlichkeit auftritt. Mit Hilfe eines Suchverfahrens wird in einem Speicher, der Abschnitte der jeweiligen Ausgabeströme speichert, nach der Markierungs- bzw. der Musterzeichenkette gesucht. Die den Ort der jeweiligen Zeichenkette im jeweiligen Ausgabesignalstrom eindeutig kennzeichnenden Informationen werden anschließend gespeichert und einander zugeordnet.

In bevorzugter Weiterbildung des erfindungsgemäßen Verfahrens wird im Konfiguriermodus zum Speichern der Musterzeichenkette im Ausgabespeicher auf einer Anzeigeeinrichtung eine dem Ausgabemedium der sekundären Ausgabeeinrichtung zugeordnete Eingabemaske angezeigt. Von einem Benutzer wird eine Musterzeichenkette an einem Eingabeort der Eingabemaske eingegeben. Anschließend wird die Musterzeichenkette an einen dem Eingabeort zugeordneten Ausgabespeicherort übertragen. Vorzugsweise geschieht dies dadurch, daß die Konvertiereinrichtung im Konfiguriermodus mit einer weiteren Datenverarbeitungseinrichtung gekoppelt wird. Die Musterzeichenkette wird unter Steuerung eines auf der weiteren Datenverarbeitungseinrichtung ablaufenden Programms in eine auf der Anzeigeeinrichtung der weiteren Datenverarbeitungseinrichtung angezeigten Eingabemaske eingegeben. Die Musterzeichenkette wird dann zusammen mit anderen Ausgabedaten von der weiteren Datenverarbeitungseinrichtung in den Ausgabespeicher der Konvertiereinrichtung übertragen. Bei dieser Ausführungsform des erfindungsgemäßen Verfahrens werden im Konfiguriermodus zwei Lernverfahren nacheinander oder parallel zueinander ausgeführt, mit denen die Konvertiereinrichtung einerseits lernt, an welcher Stelle in einem primären Ausgabesignalstrom eine zu erfassende und selektiv auszulesende Zeichenkette zu finden ist, andererseits, an welche Stelle in einem sekundären Ausgabesignalstrom die ausgelesenen Zeichenkette einzubinden ist. In dem einen Lernabschnitt des Konfigurierverfahrens erlangt die Konvertiereinrichtung Informationen über den Ort der ausgegebenen, auszulesenden Zeichenkette mit Hilfe einer Markierungszeichenkette. Die Markierungszeichenkette wird unter Steuerung durch eine vorhandene Software auf der einen Datenverarbeitungseinrichtung auf bekannte Weise eingegeben. Sie wird in einer einer primären Ausgabeeinrichtung entsprechenden Weise in den primären Ausgabesignalstrom eingebunden. In dem anderen Lernverfahren des Konfiguriermodus wird auf ähnliche Weise eine Musterzeichenkette unter Steuerung eines auf einer weiteren Datenverarbeitungseinrichtung ablaufenden Programms in einer von diesem Programm vorgegebenen Weise, beispielsweise in eine Eingabemaske, eingegeben. Auch wird die Musterzeichenkette in einen Ausgabesignalstrom eingebunden und von der weiteren Datenverarbeitungseinrichtung in den Ausgabespeicher der Konvertiereinrichtung übertragen. Die diesem Ausgabesignalstrom der weiteren Datenverarbeitungseinrichtung zugeordneten Steuersignale sind an die Erfordernisse einer sekundären Ausgabeeinrichtung angepaßt. Die Konvertiereinrichtung erkennt in beiden Lernverfahren einerseits die Markierungszeichenkette und andererseits die Musterzeichenkette, erfaßt die jeweiligen Positionsinformationen, stellt eine Verknüpfung oder Zuordnung zwischen den beiden Positionsinformationen her und speichert diese Verknüpfung ab. Damit ist die Konfiguration der Konvertiereinrichtung beendet, und die weitere Datenverarbeitungseinrichtung kann von der Konvertiereinrichtung getrennt werden. Im Betriebsmodus wird schließlich der primäre Ausgabesignalstrom von der Konvertiereinrichtung in einen sekundären Signalstrom transformiert. Dabei werden die gewünschten Zeichenketten aus dem primären in den sekundären Ausgabesignalstrom übernommen, wobei die an eine primäre Ausgabeeinrichtung angepaßten Steuersignale des primären Ausgabesignalstroms durch an eine sekundäre Ausgabeeinrichtung angepaßte Steuersignale des sekundären Ausgabesignalstroms ersetzt werden. Gleichzeitig ist eine beliebige Umpositionierung und auch mehrfache Einbindung der übernommenen Zeichenketten möglich. Das "Anlernen" der Konvertiereinrichtung im Konfiguriermodus kann ohne jegliche Kenntnis der zum Betreiben der primären oder sekundären Ausgabeeinrichtung erforderlichen Steuersignale und Detailkenntnis der auf der Datenverarbeitungseinrichtung und der weiteren Datenverarbeitungseinrichtung-ablaufenden Programme vorgenommen werden. Der Bediener braucht lediglich vorgegebene, vorzugsweise identische, Markierungs- bzw. Musterzeichenketten an die ihm angezeigten Stellen der auf den jeweiligen Datenverarbeitungseinrichtungen ablaufende Programme einzugeben und die Konvertiereinrichtung in den Konfiguriermodus zu versetzen. Die Konvertiereinrichtung ordnet dann die Markierungs- der Musterzeichenkette selbständig zu und hinterlegt die erforderlichen Positions- und Ausgabeinformationen.

Vorteile Weiterbildungen sind in den Unteransprüchen gekennzeichnet.

Im folgenden wird die Erfindung anhand von in der Zeichnung dargestellten Ausführungsbeispielen näher erläutert. In der Zeichnung zeigen:
- Fig. 1: eine Anordnung, mit der die im Konfiguriermodus auszuführenden Schritte des erfindungsgemäßen Verfahrens durchführbar sind,
- Fig. 2: die im Betriebsmodus verwendeten Einrichtungen der Anordnung gemäß Fig. 1,
- Fig. 3: eine Prinzipdarstellung, die die Zuordnung von Markierungszeichenketten und Musterzeichenketten im Konfiguriermodus veranschaulicht,
- Fig. 4A: einen Programmausschnitt, der einen Ausgabesignalstrom in einer speziellen Druckerprogrammiersprache erzeugt, und
- Fig. 4B: eine Druckausgabe des von einem Abschnitt des Programms gemäß Fig. 4A angesteuerten Druckers.

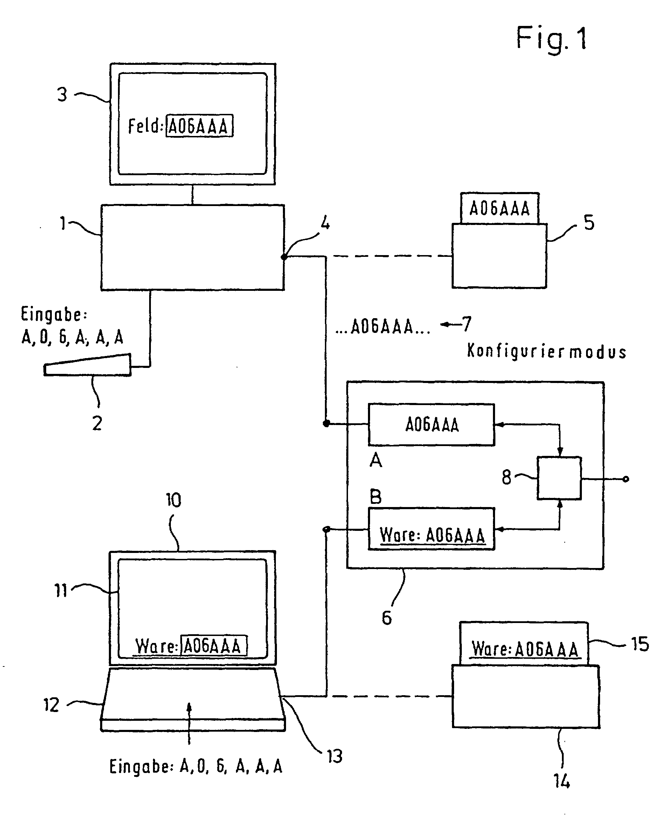

Fig. 1 zeigt eine Anordnung zur Ausführung der Schritte des Konfiguriermodus des erfindungsgemäßen Verfahrens. Bei diesem Anwendungsfall soll an eine vorhandene Datenverarbeitungseinrichtung ein neuer oder weiterer Drucker angekoppelt werden, der von der Datenverarbeitungseinrichtung ausgegebene Zeichenketten selektiv erfaßt und in einem geänderten Format ausgibt. Die vorhandene Datenverarbeitungseinrichtung 1 weist eine Tastatur-Eingabeeinrichtung 2 und einen Bildschirm 3 auf. Darüber hinaus kann die Datenverarbeitungseinrichtung 1 über eine Ausgabeschnittstelle 4 mit einem Standarddrucker 5 gekoppelt werden. Ein auf der Datenverarbeitungseinrichtung 1 ablaufendes Programm legt die Art und Weise fest, in der Eingaben auf der Tastatur 2 verarbeitet und dabei auf dem Bildschirm 3 angezeigt, über die Schnittstelle 4 ausgegeben und von dem Drucker ausgedruckt werden. Das auf der Datenverarbeitungseinrichtung 1 ablaufende Programm umfaßt Programmteile, die einem Bediener die Eingabe einer Zeichenkette in eine auf dem Bildschirm 3 angezeigte Eingabemaske gestatten. Dabei werden in der üblichen Weise die Tastatur-Eingabesignale empfangen, dekodiert, gespeichert und entsprechende Anzeigesignale dem Bildschirm 3 übermittelt. Der Bediener erkennt auf dem Bildschirm 3 eine Anzeige und daneben ein Eingabefeld der Eingabemaske, wobei ein Zeiger bzw. ein Cursor den Bediener auf die aktuelle Eingabeposition hinweist. Beispielsweise erscheint auf dem Bildschirm die Anzeige "Feld:". Dahinter befinden sich sechs freie Bildschirmpositionen, in die maximal sechs über die Tastatur 2 eingegebene Zeichen sequentiell eingeschrieben werden.

Ein weiterer Programmteil des auf der Datenverarbeitungseinrichtung 1 abgearbeiteten Programms bindet die eingegebene und gespeicherte Zeichenkette in einen an der Ausgabeschnittstelle 4 auszugebenden primären Ausgabesignalstrom ein. Dabei wird die Zeichenkette in ein Standard-Ausgabeformat überführt und verläßt als sequentielle Zeichenketten-Signalfolge die Datenverarbeitungseinrichtung 1 über die Ausgabeschnittstelle 4. In der ausgegebenen Form kann sie von dem Drucker 5 empfangen und interpretiert werden. Sie wird an einer durch Steuersignale vorgegebenen Ausgabeposition einer ausgedruckten Seite ausgegeben. Gleichzeitig kennzeichnen die Positionssteuersignale im Ausgabesignalstrom einen Ort der sequentiell ausgegebenen Zeichenkette im Signalstrom.

Im Konfiguriermodus wird der Datenverarbeitungseinrichtung 1 eine Markierungszeichenkette eingegeben, die während des normalen Betriebs nicht auftritt und die auch im Konfiguriermodus nur an einer einzigen Position in den Ausgabesignalstrom eingebunden wird. Im dargestellten Ausführungsbeispiel wird anstelle einer Zeichenkette von sechs Zeichen Länge die Markierungszeichenkette "A06AAA" eingegeben. Der Bediener gibt eine entsprechende Tastenfolge auf der Tastatur 2 ein. Die Tastatursignale werden von der Datenverarbeitungseinrichtung 1 verarbeitet und erscheinen in dem mit "Feld:" auf dem Bildschirm gekennzeichneten Eingabefeld der Eingabemaske. Außerdem werden auf ein entsprechendes Ausgabekommando hin die Zeichen der Markierungszeichenkette in den primären Ausgabesignalstrom eingebunden, was in Fig. 1 durch die Zeichenfolge 7 dargestellt ist.

Die Konvertiereinrichtung 6 empfängt den primären Ausgabesignalstrom und speichert einen vorgegebenen Abschnitt im Speicher A ab. Im Konfiguriermodus wird von der Datenverarbeitungseinrichtung 1 ein Ausgabesignalstrom erzeugt, der nur einer Seite des Druckers 5 entspricht. Bei alternativen Ausführungsbeispielen können auch mehrere Seiten von der Datenverarbeitungseinrichtung 1 ausgegeben und im Speicher A der Konvertiereinrichtung 6 gespeichert werden, sofern mehrere zu erfassende Zeichenketten bzw. Markierungszeichenketten auf aufeinanderfolgenden Seiten erfaßt werden sollen.

Die Konvertiereinrichtung 6 enthält eine Steuereinrichtung 8, die mit dem Speicher A gekoppelt ist. Die Steuereinrichtung 8 arbeitet ein Programm ab, mit dem der Speicher A nach Markierungszeichenketten durchsucht wird. Dabei wird unter anderem die Zeichenkette "A06AAA" aufgefunden. Anschließend wird eine deren Ort im Ausgabesignalstrom kennzeichnende Positionsinformation gewonnen. Diese Positionsinformation wird aus den ebenfalls im Speicher A abgelegten Steuerzeichen des Ausgabesignalstroms, insbesondere den Positionssteuerzeichen gewonnen. Sofern es sich bei dem Drucker 5, auf den das Format des Ausgabesignalstroms abgestimmt ist, um einen Drucker handelt, der die auszudruckenden Zeichen in Zeilen und Spalten anordnet, so werden als Positionsinformation die Zeilennummer und die Spaltennummer des ersten Buchstabens A der Markierungszeichenkette gespeichert. Außerdem speichert die Steuereinrichtung 8 die Länge der Markierungszeichenkette, im vorliegenden Beispiel die Zeichenanzahl 6.

Fig. 1 zeigt ferner eine zweite Datenverarbeitungseinrichtung 10, die im dargestellten Ausführungsbeispiel als Laptop ausgebildet ist. Diese Datenverarbeitungseinrichtung wird nur bei der Konfiguration der Konvertiereinrichtung verwendet. Der Laptop 10 weist ein LCD-Display 11 und eine Eingabetastatur 12 auf. Über eine Ausgabeschnittstelle 13 kann ein Drucker, beispielsweise der Drucker 14 angekoppelt werden. Auf dem Laptop kann ein Programm abgearbeitet werden, das die Eingabe einer Zeichenkette über die Tastatur 12 steuern, anschließend die so eingegebene Zeichenkette in einem Eingabefeld einer Bildschirmmaske auf dem LCD-Display 11 anzeigen und auf ein Ausgabekommando hin die Zeichenkette in einen über die Ausgabeschnittstelle 13 ausgegebenen Ausgabesignalstrom einbinden kann. Die Steuersignale bzw. das Format des Ausgabesignalstroms sind dabei an die Erfordernisse des Druckers 14 angepaßt. Die Zeichenkette wird programmgesteuert so ausgegeben, daß der Drucker 14 sie auf einer Druckerseite 15 an einer von dem Bediener der Datenverarbeitungseinrichtung 10 gewünschten Position ausdruckt.

Die Datenverarbeitungseinrichtung 10 kann vollkommen verschieden von der Datenverarbeitungseinrichtung 1 sein, ebenso wie der Drucker 14 verschieden von dem Drucker 5 sein kann. Allerdings müssen beide Datenverarbeitungseinrichtungen in der Lage sein, eine eingegebene Zeichenfolge in einen Ausgabesignalstrom in der eingegebenen Reihenfolge einzubinden. Darüber hinaus müssen beide Drucker 5 und 14 in der Lage sein, einen Signalstrom zu empfangen, in dem eine kodierte Zeichenfolge eingebunden ist, und diese Zeichenfolge auf einem Ausgabemedium, beispielsweise einem Blatt Papier, auszugeben.

Im Konfiguriermodus werden dann mit Hilfe der Eingabetastatur 12 vorzugsweise die gleichen Zeichenketten als Musterzeichenketten in die Datenverarbeitungseinrichtung 10 eingegeben, die als Markierungszeichenketten in die Datenverarbeitungseinrichtung 1 eingegeben werden. Programmgesteuert werden die eingegebenen Zeichenketten auf der Anzeige 11 wiedergegeben, beispielsweise in Eingabefeldern einer Eingabemaske angezeigt. In dem in Fig. 1 dargestellten Ausführungsbeispiel wird die Musterzeichenkette "A06AAA" eingegeben und auf dem Bildschirm hinter der Ausschrift "Ware:" angezeigt. In dem dargestellten Ausführungsbeispiel ist die Anzeige unterstrichen. Dies soll darauf hinweisen, daß der an der Schnittstelle 13 ausgegebene Ausgabesignalstrom Steuerzeichen enthält, die bei einer Ausgabe über den Drucker 14 die Ausgabe der Zeichenkette auf der Seite 15 in unterstrichener Form darstellen würde. Das Unterstreichen erfolgt hier stellvertretend für eine große Anzahl möglicher Schrift- oder Absatzformatierungen. Insbesondere soll mit dieser unterschiedlichen Darstellung der Zeichenketten angedeutet werden, daß der von der Datenverarbeitungseinrichtung 10 ausgegebene Signalstrom auf dem Drucker 14 eine andere grafische Wiedergabe der Zeichenkette erzeugen kann, als der von der Datenverarbeitungseinrichtung 1 ausgegebene primäre Ausgabesignalstrom auf dem Drucker 5 erzeugen würde.

Die Ausgabeschnittstelle 13 der Datenverarbeitungseinrichtung 10 ist im Konfiguriermodus mit einer Eingabeschnittstelle der Konvertiereinrichtung 6 gekoppelt. Dabei kann es sich - wie in Fig. 1 dargestellt - um eine separate Eingabeschnittstelle handeln; es kann sich aber auch um eine gemeinsame Eingabeschnittstelle für beide Speicher A und B handeln, an die beide Datenverarbeitungseinrichtungen 1 und 10 nacheinander gekoppelt werden. Ein vorgegebener Abschnitt des Ausgabesignalstroms der Datenverarbeitungseinrichtung 10, beispielsweise der eine Seite 15 beschreibende Abschnitt des Ausgabesignalstroms, wird im Speicher B der Konvertiereinrichtung 6 gespeichert. Anschließend wird mit Hilfe der Steuereinrichtung 8 der Speicher B nach Musterzeichenketten durchsucht und die gefundenen Musterzeichenketten mit den im Speicher A gefundenen Markierungszeichenketten verglichen. Wenn eine so gefundene Musterzeichenkette im Speicher B mit einer Markierungszeichenkette im Speicher A übereinstimmt, so wird die Positionsinformation der Markierungszeichenkette im Speicher A der Positionsinformation der Musterzeichenkette im Speicher B zugeordnet. Damit die Steuereinrichtung 8 diese Zuordnung vornehmen kann, brauchen die Markierungszeichenketten und die zugehörigen Musterzeichenketten allerdings nicht identisch zu sein; sie müssen nur in einer bekannten Relation zueinander stehen. Die Positionsinformation der Musterzeichenkette im Speicher B wird als Ausgabeinformation bezeichnet, da sie die Ausgabeposition der im Betriebsmodus auszugebenden Zeichenkette bestimmt.

Die von der Steuereinrichtung der Konvertiereinrichtung im Speicher A anhand der Markierungszeichenketten aufgefundenen Positionsinformationen (beispielsweise die Zeilen- und Spaltennummern) dienen im späteren Betriebsmodus dem Auffinden der an den gleichen Stellen gespeicherten Zeichenketten. Andere Steuersignale des primären Ausgabesignalstroms der Datenverarbeitungseinrichtung 1, die die Position der Zeichenkette im Signalstrom nicht mitbestimmen (beispielsweise solche, die die Schriftart der Zeichenkette für den Drucker 5 festlegen würden), werden nicht benötigt und deshalb im Speicher A ignoriert oder nicht in diesem gespeichert. In dem Speicher B werden dagegen nicht nur die der Musterzeichenkette zugeordneten Positionsinformationen zum richtigen Zuordnen der an diesen Stellen einzulesenden Zeichenketten gespeichert, sondern darüber hinaus sämtliche zusätzlichen Inhalte, die die spätere Ausgabe mitbestimmen sollen. Beispielsweise kann der Speicher B einen längeren Text enthalten, in den an vorgegebenen Stellen (den Stellen der Musterzeichenketten) die im Betriebsmodus selektiv auszulesenden Zeichenketten eingebunden werden sollen. Ferner kann der Speicher B Grafiken enthalten und Steuersignale, die die Positionierung und grafische Wiedergabe der Ausgabe auf dem Drucker 14 beeinflussen. Der Speicher B wird deshalb auch als Ausgabespeicher der Konvertiereinrichtung 6 bezeichnet. Bei einem Ausführungsbeispiel können Speicher A und Speicher B auch frei wählbare Speicherabschnitte einer von der Steuereinrichtung adressierbaren Speichereinrichtung, beispielsweise eines RAM, sein.

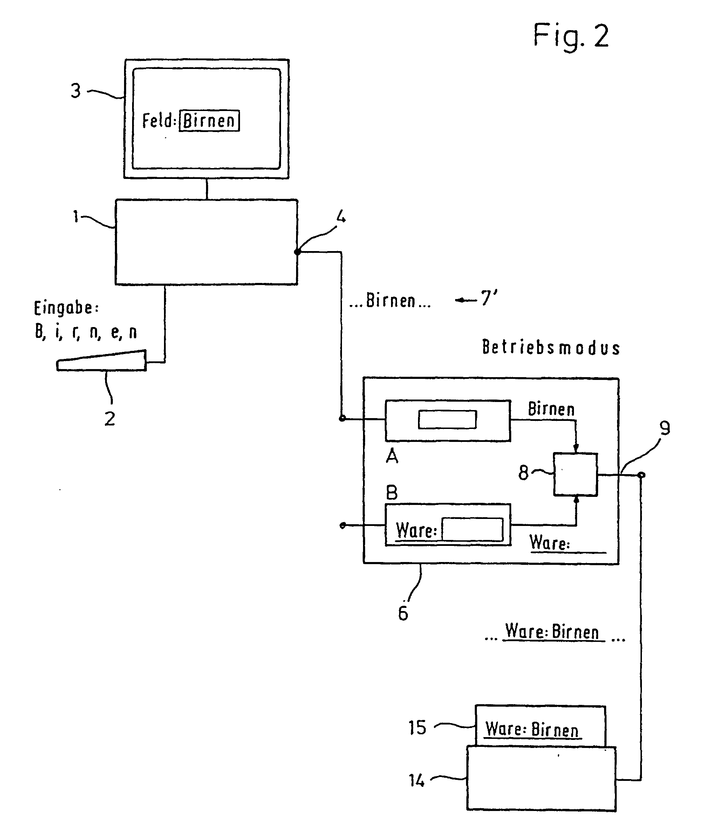

Fig. 2 zeigt die im Betriebsmodus verbleibende Anordnung. Die Datenverarbeitungseinrichtung 1 (mit Eingabeeinrichtung 2, Anzeige 3 und Ausgabeschnittstelle 4) ist über die Konvertiereinrichtung 6 mit dem Drucker 14 gekoppelt. Der Ausgabesignalstrom der Ausgabeschnittstelle 4 ist weiterhin so formatiert, als würde er den Drucker 5 ansteuern. Die Konvertiereinrichtung 6 erzeugt aus diesem primären Ausgabesignalstrom einen sekundären Ausgabesignalstrom an ihrer Ausgabeschnittstelle 9. Die Formatierung des sekundären Ausgabesignalstroms entspricht der Formatierung des an der Schnittstelle 13 der Datenverarbeitungseinrichtung 10 ausgegebenen Signalstroms und ist an den Drucker 14 angepaßt.

Ein Bediener gibt unter Steuerung der auf der Datenverarbeitungseinrichtung 1 ablaufenden Software in eine vorgegebene Eingabemaske mit Hilfe der Tastatur 2 eine beliebige Zeichenkette (im dargestellten Beispiel die Zeichenkette "Birnen") ein. Da die ablaufende Software identisch ist, wird diese Zeichenkette in der gleichen Weise angezeigt und in den primären Ausgabesignalstrom als Zeichenfolge 7' eingebunden, wie im Konfiguriermodus die Markierungszeichenkette ("A06AAA"). Die Eingabe der Zeichenketten kann bei alternativen Ausführungsbeispielen auch ohne Bedienereingriff, programmgesteuert erfolgen.

Die Konvertiereinrichtung empfängt den primären Ausgabesignalstrom und speichert ihn (seitenweise) im Speicher A zwischen. Anschließend liest die Steuereinrichtung 8 an den durch die Positionsinformationen vorgegebenen Stellen die dort gespeicherten Zeichenketten selektiv aus und überträgt diese Zeichenketten (hier: "Birnen") an vorgegebene Stellen in den sekundären Ausgabesignalstrom.

Gleichzeitig wird unter Steuerung der Steuereinrichtung 8 der sekundäre Ausgabesignalstrom aus dem Speicherinhalt des Ausgabespeichers B erzeugt. An den durch die entsprechenden Musterzeichenketten markierten Stellen des aus dem Ausgabespeicher B gewonnenen Signalstroms werden die aus dem Speicher A ausgelesenen Zeichenketten eingefügt. Dabei werden Formatierungen und grafische Anordnungen vom Inhalt des Ausgabespeichers B vorgegeben. Im dargestellten Beispiel wird die Zeichenkette "Birnen" hinter die Zeichenkette "Ware:" in den sekundären Ausgabesignalstrom eingefügt. Die dabei aus dem Ausgabespeicher B übernommene Formatierung ist durch die Unterstreichung angedeutet. Bei alternativen Ausführungsformen können die Zeichenketten aus Speicher A auch vorab in den Ausgabespeicher B übertragen und danach erst der sekundäre Ausgabesignalstrom aus Speicher B erzeugt werden. Der Drucker 14 empfängt den sekundären Ausgabesignalstrom und erzeugt auf der Seite 15 die entsprechende Ausgabe ("Ware:Birnen") .

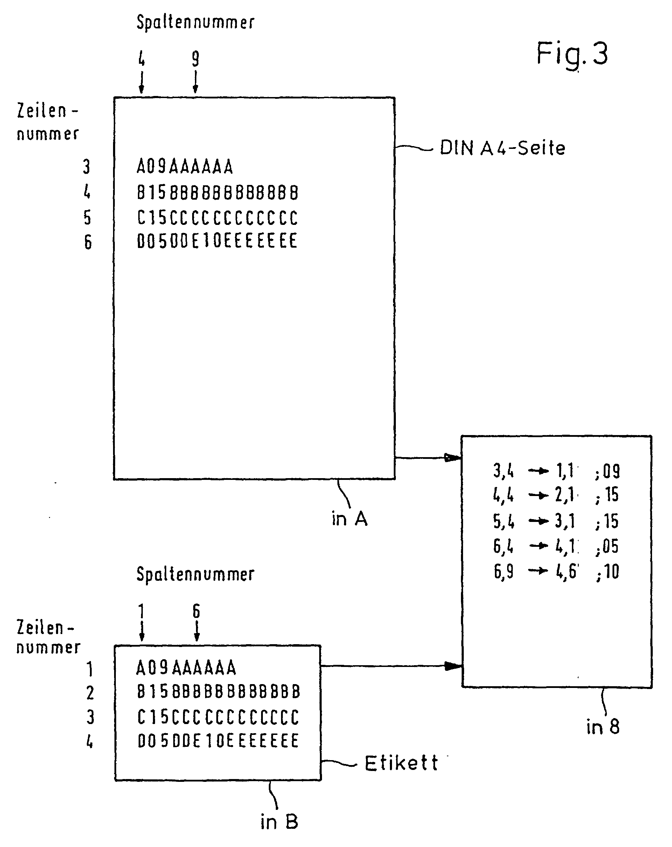

Fig. 3 zeigt eine schematische Darstellung der im Konfiguriermodus gewonnenen Positionszuordnungen der im Speicher A abgelegten Markierungszeichenketten und der im Ausgabespeicher B abgespeicherten Musterzeichenketten. Das dargestellte Beispiel zeigt eine Anwendung, bei der aus dem Briefkopf des einer DINA4-Seite entsprechenden Abschnitts des primären Ausgabesignalstroms die eine Anschrift darstellenden Informationen selektiv ausgelesen und zum Drucken von Etiketten verwendet werden. Die Etiketten werden auf einem Etikettendrucker ausgegeben. Der für den Ausdruck eines Etiketts erforderliche Abschnitt des sekundären Ausgabesignalstroms ist in dem Ausgabespeicher B abgelegt. Im Konfiguriermodus durchsucht die Steuereinrichtung 8 sowohl den Speicher A nach Markierungszeichenketten als auch den Ausgabespeicher B nach identischen Musterzeichenketten. In einer Tabelle werden die entsprechenden Positionszuordnungen zusammen mit den Längen der Zeichenketten abgelegt. Dies ist auf der rechten Seite von Fig. 3 veranschaulicht. In dem dargestellten, einfachen Fall sind nur entsprechende Zeilenund Spaltennummern als Positionsinformationen abgelegt. Dahinter sind die Maximallängen der Zeichenketten zugeordnet.

Im Betriebsmodus wird jeweils ein Abschnitt des Ausgabesignalstroms, der einer Briefseite entspricht, in den Speicher A abgelegt. Die an den von der Steuereinrichtung 8 gespeicherten Positionen (3,4; 4,4; 5,4; 6,4 und 6,9) beginnenden Zeichenketten werden aus dem Speicher A jeweils solange ausgelesen, bis die jeweilige Maximalanzahl der Zeichen (9, 15, 15, 5 und 10) oder ein Zeichenkettenende-Signal erreicht wird. Die jeweils aus einer Briefseite ausgelesenen Zeichenketten werden in einen Abschnitt des sekundären Ausgabesignalstroms eingebunden, der sämtliche Informationen für den Etikettendrucker zur Ausgabe eines Etiketts enthält. Die für die Ausgabe des Etiketts erforderlichen Steuersignale, insbesondere die Informationen zum Anordnen der Zeichenketten und sonstige Formatinformationen werden aus dem Ausgabespeicher B ausgelesen. Das Einbinden der aus dem Speicher A ausgelesenen Zeichenketten erfolgt an den Positionen (Zeilen und Spalten), die von der Steuereinrichtung 8 den Positionen des Speichers A zugeordnet wurden. Die in Fig. 3 (in 8) dargstellte Zuordnungstabelle ist vorzugsweise in einem nicht-flüchtigen Speicher der Steuereinrichtung 8 abgelegt. Anstelle der Seiten- und Spaltennummern können auch Speicheradressen der Speicher A und B einander zugeordnet sein.

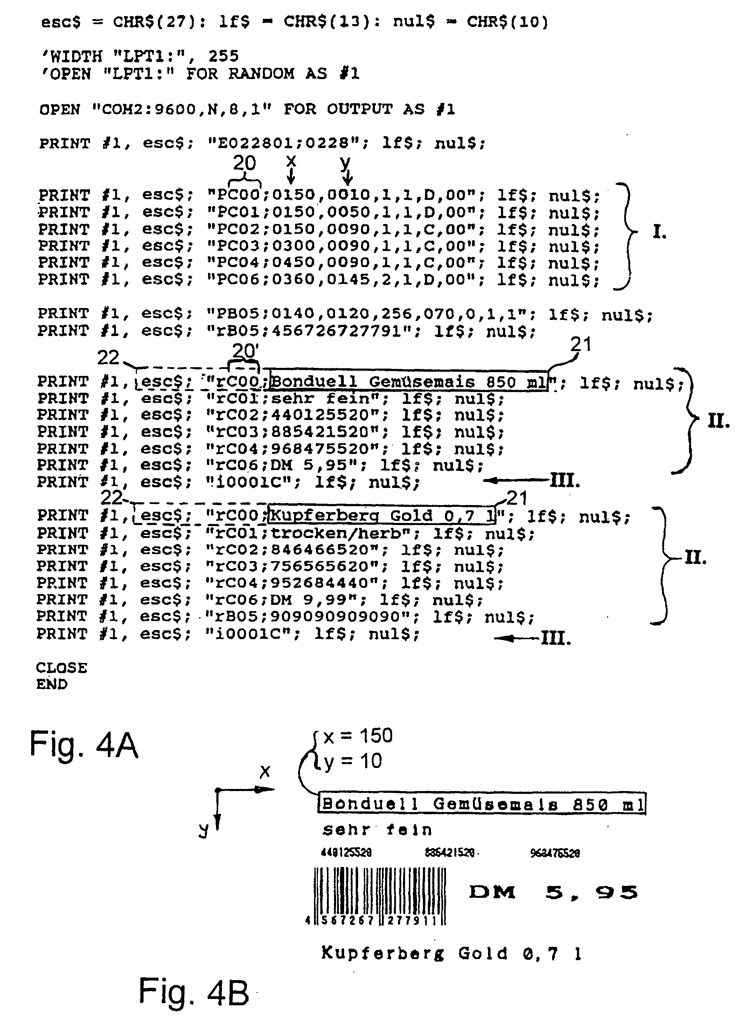

Fig. 4A zeigt einen Ausschnitt eines Computerprogramms, das an einer Ausgabeschnittstelle einen Ausgabesignalstrom für einen anderen Etikettendrucker erzeugt. Dabei kodiert der Ausgabesignalstrom Befehle einer speziellen Druckerprogrammiersprache. Ein solcher Ausgabesignalstrom gestattet es nicht, eine Zeichenkette aufgrund von einfachen Spalten- und Zeilennummern als Positionsinformation herauslesen zu können, um die Zeichenkette beispielsweise auf einem anderen, neuen Drucker ausgeben zu können.

An den Drucker werden bestimmte Befehlssequenzen übertragen. Die Ausgabebefehle (PRINT #1) des Computerprogramms haben folgende Bedeutung. Zunächst wird durch eine Reihe von Ausgabebefehlen definiert, an welchen Stellen des Etiketts in welcher Schriftart und -größe Zeichenketten auszugeben sind. Dies geschieht durch Initialisierungsbefehle im Programmabschnitt I. Den auszugebenden Zeichenketten werden Zeichenkettennummern 20, im dargestellten Beispiel C00 bis C06, zugeordnet. Den als Identifizierungszeichenkette ausgegebenen Zeichenkettennummern folgen X- und Y-Koordinaten der Anfangsorte der jeweiligen Zeichenkette auf dem Etikett. Ein Beispiel eines ausgegebenen Etiketts ist in Fig. 4B dargestellt. Außerdem ist in Fig. 4B der Koordinatenursprung des zugehörigen X,Y-Koordinatensystem gezeigt. Aus einem Vergleich des Abschnitts I. der Befehle gemäß Fig. 4A und der Anordnung der Zeichenketten auf dem Etikett gemäß Fig. 4B läßt sich beispielsweise erkennen, daß die Zeichenkette C00 beginnend an den Koordinaten X = 150 und Y = 10 ausgedruckt werden soll.

Für jede Art eines auszugebenden Etiketts enthält die Programmsequenz gemäß Fig. 4A einen Abschnitt II., der den jeweiligen Inhalt der mit der Zeichenkettennummer identifizierten Zeichenkette definiert. Aus diesen Abschnitten muß die Konvertiereinrichtung im Betriebsmodus die jeweiligen Zeichenketten (ohne Steuersignale und Steuerbefehle) selektiv herauslesen. Die Befehle der Abschnitte II. enthalten ebenfalls die Zeichenkettennummer 20'. In der ersten Zeile des ersten Abschnitts II. wird beispielsweise der Inhalt einer Zeichenkette 21 ("Bonduell Gemüsemais 850 ml") definiert. In gleicher Weise wird im folgenden Abschnitt II. der Inhalt der Zeichenkette neu definiert ("Kupferberg Gold 0,7 1"). Als Positionsinformation kann nun die der Zeichenkette im Ausgabesignalstrom unmittelbar vorangestellte Zeichensequenz der jeweiligen Programmzeile verwendet werden, da sie die für jedes Etikett einmalige Zeichenkettennummer (zum Beispiel C00) in Verbindung mit bestimmten weiteren Steuerzeichen enthält. Die als Positionsinformation verwendbare Steuersequenz der jeweils ersten Zeichenkette lautet beispielsweise: "CHR$(27) r c 0 0 ;" und besteht aus sechs Zeichen. Diese Zeichensequenz kann zum Auffinden der Position der Zeichenkette 21 in dem durch die in Fig. 4A dargestellte Programmsequenz erzeugten Ausgabesignalstrom verwendet werden.

Im Konfiguriermodus wird anstelle der in dem Programm dargestellten Zeichenketten eine Markierungszeichenkette mit der Maximalanzahl der möglichen Zeichen eingesetzt. Die Konvertiereinrichtung erfaßt die Markierungszeichenkette und speichert die sechs unmittelbar vorangehenden Zeichen als Positionsinformation. Im Betriebsmodus wird diese in der Konvertiereinrichtung gespeicherte Positionsinformation dann verwendet, um die nachfolgende Zeichenkette bei jedem Auftreten dieser Positionsinformation herauszulesen.

Bei einigen Etikettendrucker-Programmiersprachen enthält die Sequenz der Druckerbefehle Befehle, die die jeweilige Anzahl der nacheinander auszudruckenden Etiketten des gleichen Inhalts angeben. Im in Fig. 4A dargestellten Beispiel sind dies die Befehle, die mit den Programmzeilen III. ausgegeben werden. Auch diese Information (z.B. der Zeichenkette "i0001C") kann mit dem erfindungsgemäßen Verfahren selektiv ausgegeben und anschließend in den sekundären Ausgabesignalstrom überführt werden. Damit können auch auf dem sekundären Drucker die Etiketten (in neuen Format) in gleicher Anzahl gedruckt werden.

## Patentansprüche

1. Verfahren zum selektiven Erfassen und Auslesen wenigstens einer Zeichenkette aus einem primären Ausgabesignalstrom einer Datenverarbeitungseinrichtung,
wobei die wenigstens eine Zeichenkette der Datenverarbeitungseinrichtung eingegeben und in den an einer Ausgabeschnittstelle der Datenverarbeitungseinrichtung ausgegebenen primären Ausgabesignalstrom eingebunden wird,
wobei die Anzahl der Zeichen der wenigstens einen selektiv auszulesenden Zeichenkette jeweils eine vorgegebene Maximalanzahl nicht übersteigt, und
wobei jeder Zeichenkette Positionssteuersignale zugeordnet und in einen vorgegebenen Abschnitt des primären Ausgabesignalstroms eingefügt werden, wobei die Positionssteuersignale eine an die Ausgabeschnittstelle ankoppelbare primäre Ausgabeeinrichtung veranlassen können, die jeweils zugeordnete Zeichenkette an einer vorgegebenen Ausgabeposition eines Ausgabemediums auszugeben,
**dadurch gekennzeichnet,**
**daß** eine an die Ausgabeschnittstelle der Datenverarbeitungseinrichtung angekoppelte Konvertiereinrichtung in einen Konfiguriermodus versetzt wird,
**daß** der Datenverarbeitungseinrichtung anstelle der wenigstens einen selektiv zu erfassenden Zeichenkette eine Markierungszeichenkette eingegeben wird, wobei jede Markierungszeichenkette eine einmalige Folge von Zeichen bildet, die in dem während des normalen Betriebs ausgegebenen primären Ausgabesignalstrom nicht auftritt, wobei die Anzahl der Zeichen der Markierungszeichenkette gleich der Maximalanzahl der Zeichen der zugehörigen Zeichenkette ist,
**daß** jede Markierungszeichenkette mit zugeordneten Positionssteuersignalen in den primären Ausgabesignalstrom eingebunden wird,
**daß** von der Konvertiereinrichtung der primäre Ausgabesignalstrom empfangen und nach Markierungszeichenketten durchsucht wird, wobei bei Erfassen einer Markierungszeichenkette eine deren Anfangsort im primären Ausgabesignalstrom kennzeichnende Positionsinformation aus den der jeweiligen Markierungszeichenkette zugeordneten, in dem vorgegebenen Abschnitt eingefügten Posicionssteuersignalen gewonnen und zusammen mit der Anzahl der Zeichen der Markierungszeichenkette in der Konvertiereinrichtung gespeichert wird, und
**daß** die Konvertiereinrichtung in einen Betriebsmodus gebracht wird, in welchem der primäre Ausgabesignalstrom empfangen, aus den empfangenen Positionssteuersignalen eine aktuelle Positionsinformation gewonnen, die aktuelle Positionsinformation mit jeder der gespeicherten Positionsinformationen verglichen und bei Übereinstimmung der aktuellen Positionsinformation mit einer der gespeicherten Positionsinformationen die zugehörige Zeichenkette aus dem primären Ausgabesignalstrom ausgelesen wird.

2. Verfahren nach Anspruch 1, **dadurch gekennzeichnet,**
**daß** von dem vorgegebenen Abschnitt des primären Ausgabesignalstroms eine Seite eines zweidimensionalen Ausgabmediums definiert wird,
**daß** von der zu erfassenden Zeichenkette vorangestellten Positionssteuersignalen Zeilen und Spalten der Seite definiert werden, wobei die Ausgabeposition eines Zeichens der Zeichenkette durch eine Spaltennummer und eine Zeilennummer eindeutig festgelegt wird, und
**daß** im Konfiguriermodus zu jeder Markierungszeichenkette eine Spaltennummer und eine Zeilennummer als Positionsinformation gespeichert werden.

3. Verfahren nach Anspruch 2, **dadurch gekennzeichnet, daß** die als Positionsinformation gespeicherte Zeilen- und Spaltennummer der Ausgabeposition des ersten Zeichens der Markierungszeichenkette entsprechen.

4. Verfahren nach Anspruch 2 oder 3, **dadurch gekennzeichnet,**
**daß** im Betriebsmodus aus den empfangenen Positionssteuersignalen und Zeichenketten jeweils eine aktuelle Zeilennummer und eine aktuelle Spaltennummer als aktuelle Positionsinformation gewonnen werden, und
**daß** bei Überstimmung der aktuellen Positionsinformation mit der gespeicherten Positionsinformation die nachfolgenden Zeichen aus dem Ausgabesignalstrom solange ausgelesen werden, bis entweder die Maximalanzahl der Zeichen der Zeichenkette erreicht oder ein Zeichenkettenende-Signal erfaßt wird.

5. Verfahren nach einem der Ansprüche 2 bis 4, **dadurch gekennzeichnet, daß** die Positionssteuersignale solche Signale umfassen, von denen der Beginn einer neuen Seite oder einen neuen Zeile angezeigt wird, und
daß die aktuelle Positionsinformation in jeweils einem Zeilenzähler für die Zeilennummer und einem Spaltenzähler für die Spaltennummer gewonnen und gespeichert wird, wobei der Zeilenzähler durch ein den Beginn einer neuen Seite anzeigendes Positionssteuersignal und der Spaltenzähler durch den Beginn einer neuen Seite oder den Beginn einer neuen Zeile anzeigende Positionssteuersignale auf Null zurückgesetzt wird.

6. Verfahren nach einem der Ansprüche 2 bis 5, **dadurch gekennzeichnet, daß** in der Konvertiereinrichtung im Konfiguriermodus jeweils die zu einer Seite des Ausgabemediums gehörenden Positionssteuersignale und Zeichenketten zwischengespeichert werden,
daß die zwischengespeicherten Zeichenketten nach Markierungszeichenketten durchsucht werden, und
daß bei Auffinden einer Markierungszeichenkette aus den vorangestellten Positionssteuersignalen und Zeichenketten der Seite die als Positionsinformation zu speichernde Zeilennummer und die zu speichernde Spaltennummer gewonnen werden.

7. Verfahren nach Anspruch 6, **dadurch gekennzeichnet, daß**, während die in einem ersten Seitenspeicher der Konvertiereinrichtung zwischengespeicherten Abschnitte des primären Ausgabesignalstroms nach Markierungszeichenketten durchsucht und aus den zwischengespeicherten Abschnitten die Positionsinformationen gewonnen werden, die eine darauffolgende Seite des Ausgabemediums bildenden Abschnitte des primären Ausgabesignalstroms in einem zweiten Seitenspeicher zwischengespeichert werden.

8. Verfahren nach Anspruch 1, **dadurch gekennzeichnet,**
**daß** zu jeder Zeichenkette eine eindeutig zugeordnete Teilsequenz von Positionssteuersignalen in den vorgegebenen Abschnitt des primären Ausgabesignalstroms eingefügt wird, wobei es der Ausgabeeinrichtung mit Hilfe der Teilsequenz von Positionssteuersignalen ermöglicht wird, die Ausgabeposition der Zeichenkette zu bestimmen,
**daß** im Konfiguriermodus der vorgegebene Abschnitt des primären Ausgabesignalstroms zwischengespeichert und die einer Markierungszeichenkette in dem vorgegebenen Abschnitt zugeordnete Teilsequenz verwendet wird, um die zugehörige Positionsinformation zu gewinnen, und
**daß** die einer Zeichenkette zugeordnete Teilsequenz im Betriebsmodus verwendet wird, um die aktuelle Positionsinformation zu gewinnen.

9. Verfahren nach Anspruch 8, **dadurch gekennzeichnet, daß** die Teilsequenz in einer vorgegebenen örtlichen Relation zur zugeordneten Zeichenkette in den primären Ausgabesignalstrom eingefügt wird.

10. Verfahren nach Anspruch 9, **dadurch gekennzeichnet,**
**daß** die Teilsequenz der Zeichenkette unmittelbar vorangestellt oder angehängt wird, und
**daß** ein Abschnitt der Teilsequenz als Positionsinformation gespeichert wird.

11. Verfahren nach Anspruch 10, **dadurch gekennzeichnet,**
**daß** die Teilsequenz der Zeichenkette vorangestellt wird,
**daß** im Betriebsmodus die empfangenen Positionssteuersignale kontinuierlich mit jeder gespeicherten Teilsequenz verglichen werden und
**daß** bei Erfassen einer Übereinstimmung die der Teilsequenz unmittelbar folgenden Zeichen solange aus den zwischengespeicherten Abschnitten des primären Ausgabesignalstroms ausgelesen werden, bis die der Teilsequenz zugeordnete Maximalanzahl der Zeichen der Zeichenkette erreicht oder ein Zeichenkettenende-Signal erfaßt wird.

12. Verfahren nach einem der Ansprüche 1 bis 11, **dadurch gekennzeichnet, daß** jede Markierungszeichenkette wenigstens vier Zeichen lang ist und wenigstens ein Zeichen enthält, das die jeweilige Maximalanzahl der Zeichen darstellt.

13. Verfahren nach Anspruch 12, **dadurch gekennzeichnet, daß** die verbleibenden Zeichen der Markierungszeichenkette identisch, aber verschieden von den Zeichen jeder anderen Markierungszeichenkette sind.

14. Verfahren nach Anspruch 13, **dadurch gekennzeichnet, daß** die verbleibenden Zeichen Buchstaben darstellen.

15. Verfahren nach einem der Ansprüche 12 bis 14, **dadurch gekennzeichnet, daß** das zweite und das dritte Zeichen der Markierungszeichenkette die Maximalanzahl der Zeichen darstellen.

16. Verfahren einem der Ansprüche 1 bis 15, **dadurch gekennzeichnet,**
**daß** nach dem Auslesen der wenigstens einen Zeichenkette ein von der wenigstens einen ausgelesenen Zeichenkette abhängiger sekundärer Ausgabesignalstrom von der Konvertiereinrichtung an eine an einer Ausgabeschnittstelle angekoppelte sekundäre Ausgabeeinrichtung ausgegeben wird.

17. Verfahren nach Anspruch 16, **dadurch gekennzeichnet, daß** der sekundäre Ausgabesignalstrom Signale enthält, die die sekundäre Ausgabeeinrichtung zur Ausgabe jeweils einer von den ausgelesenen Zeichenketten abhängigen Zeichenfolge veranlassen.

18. Verfahren nach Anspruch 17, **dadurch gekennzeichnet, daß** der sekundäre Ausgabesignalstrom jede der ausgelesenen Zeichenketten enthält.

19. Verfahren nach Anspruch 17 oder 18, **dadurch gekennzeichnet, daß** im Konfiguriermodus zu jeder gespeicherten Positionsinformation neben der Anzahl der Zeichen der Markierungszeichenkette eine Ausgabeinformation zugeordnet und gespeichert wird, wobei die Ausgabeinformation den Inhalt und den Ort der Ausgabe der von der ausgelesenen Zeichenketten abhängigen Zeichenfolge definiert.

20. Verfahren nach Anspruch 19, **dadurch gekennzeichnet,**
**daß** der sekundäre Ausgabesignalstrom aus in einem Ausgabespeicher gespeicherten Ausgabedaten gebildet wird,
**daß** die ausgelesenen Zeichenketten als Teil der Ausgabedaten vor dem Bilden des sekundären Ausgabesignalstroms in vorgegebene Ausgabespeicherorte des Ausgabespeichers eingeschrieben werden, und
**daß** im Konfiguriermodus jeder gespeicherten Positionsinformation als Ausgabeinformation wenigstens eine Adresse eines vorgegebenen Ausgabespeicherorts zugeordnet wird.

21. Verfahren nach Anspruch 20, **dadurch gekennzeichnet, daß** die wenigstens eine Adresse eines vorgegebenen Ausgabespeicherorts zugeordnet wird, indem
an dem wenigstens einen vorgegebenen Ausgabespeicherort eine Musterzeichenkette gespeichert wird, wobei die Musterzeichenkette in einer vorgebenen Relation zu der der gespeicherten Positionsinformation zugeordneten Markierungszeichenkette steht,
nach dem Erfassen einer Markierungszeichenkette der Ausgabespeicher nach Musterzeichenketten durchsucht wird, und
bei Auffinden einer in der vorgegebenen Relation zur Markierungszeichenkette stehenden Musterzeichenkette deren Adresse im Ausgabespeicher in Zuordnung zur Positionsinformation gespeichert wird.

22. Verfahren nach Anspruch 21, **dadurch gekennzeichnet, daß** die, Musterzeichenkette und die zugeordnete Markierungszeichenkette identische Zeichenfolgen darstellen.

23. Verfahren nach Anspruch 21 oder 22, **dadurch gekennzeichnet, daß** im Konfiguriermodus zum Speichern der Musterzeichenkette im Ausgabespeicher
auf einer Anzeigeeinrichtung eine dem Ausgabemedium der sekundären Ausgabeeinrichtung zugeordnete Eingabemaske angezeigt,
von einem Benutzer eine Musterzeichenkette an einem Eingabeort der Eingabemaske eingegeben, und
die Musterzeichenkette an einen dem Eingabeort zugeordneten Ausgabespeicherort übertragen wird.

24. Verfahren nach Anspruch 23, **dadurch gekennzeichnet,**
**daß** die Konvertiereinrichtung im Konfiguriermodus mit einer weiteren Datenverarbeitungseinrichtung gekoppelt wird,
**daß** die Musterzeichenkette unter Steuerung eines auf der weiteren Datenverarbeitungseinrichtung ablaufenden Programms in eine auf der Anzeigeeinrichtung der weiteren Datenverarbeitungseinrichtung angezeigte Eingabemaske eingegeben wird, und
**daß** die Musterzeichenkette zusammen mit anderen Ausgabedaten von der weiteren Datenverarbeitungseinrichtung in den Ausgabespeicher der Konvertiereinrichtung übertragen wird.

## Claims

1. Method for selective detection and readout of at least one character string from a primary output signal stream of a data processing unit,
wherein the at least one character string is input into a data processing unit and is incorporated into a primary output signal stream output at an output interface of the data processing unit,
wherein the number of characters of the at least one character string to be read out selectively does not exceed a predetermined maximum number in each case, and
wherein position control signals are allocated to each character string and are inserted into a predetermined portion of the primary output signal stream, wherein the position control signals can cause a primary output device which is capable of being connected to the output interface to output the respective allocated character string at a predetermined output position of an output medium,
**characterised in that** a conversion device connected to the output interface of the data processing unit is put into a configuration mode,
that a marking character string is input into the data processing unit instead of the at least one character string which is to be selectively detected, each marking character string forming a unique sequence of characters which does not occur in the primary output signal stream output during the normal operation, and the number of characters of the marking character string being equal to the maximum number of characters of the appertaining character string,
that each marking character string with allocated position control signals is incorporated into the primary output signal stream,
that the primary output signal stream is received by the conversion device and searched for marking character strings, and when a marking character string is detected position data identifying its point of origin in the primary output signal stream is obtained from the position control signals allocated to the respective marking character string and inserted in the predetermined portion, and this position data is stored together with the number of characters of the marking character string in the conversion device, and
that the conversion device is put into an operating mode in which the primary output signal stream is received, current position data is obtained from the received position control signals, the current position data is compared with each of the stored items of position data and when the current position data corresponds to stored position data the appertaining character string is read out from the primary output signal stream.

2. Method as claimed in Claim 1, **characterised in that**
a page of a two-dimensional output medium is defined by the predetermined portion of the primary output signal stream,
that lines and columns of the page are defined by the position control signals preceding the character string to be detected, wherein the output position of a character of the character string is fixed unambiguously by a column number and a line number, and
that in the configuration mode a column number and a line number is stored as position data for each marking character string.

3. Method as claimed in Claim 2, **characterised in that** the line and column numbers stored as position data correspond to the output position of the first character of the marking character string.

4. Method as claimed in claim 2 or 3, **characterised in that**
in the operating mode a current line number and a current column number are obtained in each case as current position data from the received position control signals and character strings, and
that when the current position data correspond to the stored position data the subsequent characters are read out from the output signal stream until either the maximum number of characters of the character string is reached or a character string end signal is detected.

5. Method as claimed in one of Claims 2 to 4, **characterised in that** the position control signals comprise those signals which indicate the start of a new page or of a new line, and
that the current position data is obtained and stored in each case in a line counter for the line number and a column counter for the column number, wherein the line counter is reset to zero by a position control signal indicating the start of a new page and the column counter is reset to zero by position control signals indicating the start of a new page or the start of a new line.

6. Method as claimed in one of Claims 2 to 5, **characterised in that** in the configuration mode the position control signals and character strings belonging to a page of the output medium are in each case buffered in the conversion device,
that the buffered character strings are searched for marking character strings, and
that when a marking character string is found the line number to be stored as position data and the column number to be stored are obtained from the preceding position control signals and character strings of the page.

7. Method as claimed in Claim 6, **characterised in that** while the portions of the primary output signal stream buffered in a first page memory of the conversion device are searched for marking character strings and the position data are obtained from the buffered portions, the portions of the primary output signal stream forming a succeeding page of the output medium are buffered in a second page memory.

8. Method as claimed in Claim 1, **characterised in that**
for each character string an unambiguously allocated part-sequence of position control signals is inserted into the predetermined portion of the primary output signal stream, and with the aid of the part-sequence of position control signals the output device is enabled to determine the output position of the character string,
that in the configuration mode the predetermined portion of the primary output signal stream is buffered and the part-sequence allocated to a marking character string in the predetermined portion is used in order to obtain the appertaining position data, and
that in the operating mode the part-sequence allocated to a character string is used in order to obtain the current position data.

9. Method as claimed in Claim 8, **characterised in that** the part-sequence is inserted into the primary output signal stream in a predetermined spatial relation to the allocated character string.

10. Method as claimed in Claim 9, **characterised in that** the part-sequence immediately precedes the character string or runs on from it, and
that a portion of the part-sequence is stored as position data.

11. Method as claimed in Claim 10, **characterised in that**
the part-sequence precedes the character string,
that in the operating mode the received position control signals are continuously compared with each stored part-sequence and
that when it is detected that they correspond the characters immediately following the part-sequence are read out of the buffered portions of the primary output signal stream until the maximum number of characters of the character string which are allocated to the part-sequence is reached or a character string end signal is detected.

12. Method as claimed in one of Claims 1 to 11, **characterised in that** each marking character string is at least four characters long and contains at least one character which represents the respective maximum number of characters.

13. Method as claimed in Claim 12, **characterised in that** the remaining characters of the marking character string are identical but different from the characters of any other marking character string.

14. Method as claimed in Claim 13, **characterised in that** the remaining characters represent letters.

15. Method as claimed in one of Claims 12 to 14, **characterised in that** the second and the third characters of the marking character string represent the maximum number of characters.

16. Method as claimed in one of Claims 1 to 15, **characterised in that** after readout of the at least one character string a secondary output signal stream depending upon the at least one character string which has been read out is output to a secondary output device connected to an output interface.

17. Method as claimed in Claim 16, **characterised in that** the secondary output signal stream contains signals which cause the secondary output device to output a character sequence in each case which is dependent upon the character strings read out.

18. Method as claimed in Claim 17, **characterised in that** the secondary output signal stream contains each of the character strings which have been read out.

19. Method as claimed in Claim 17 or 18, **characterised in that** in the configuration mode apart from the number of characters in the marking character string an item of output data is allocated and stored for each stored item of position data, wherein the output data defines the content and the location of the output of the character sequence dependent upon the character string which has been read out.

20. Method as claimed in Claim 19, **characterised in that**
the secondary output signal stream is formed from output data stored in an output memory,
that the character strings which have been read out are written into predetermined output memory locations of the output memory as part of the output data before the formation of the secondary output signal stream, and
that in the configuration mode at least one address of a predetermined output memory location is allocated to each stored item of position data as output data.

21. Method as claimed in Claim 20, **characterised in that** the at least one address of a predetermined output memory location is allocated **in that**
a pattern character string is stored at the at least one predetermined output memory location, wherein the pattern character string stands in a predetermined relation to the marking character string allocated to the stored position data,
after the detection of a marking character string the output memory is searched for pattern character strings, and
when a pattern character string standing in the predetermined relation to the marking character string is found the address thereof is stored in association with the position data.

22. Method as claimed in Claim 21, **characterised in that** the pattern character string and the allocated marking character string represent identical character sequences.

23. Method as claimed in Claim 21 or 22, **characterised in that** in the configuration mode for storage of the pattern character string in the output memory
an input mask associated with the output medium of the secondary output device is displayed on a display device,
a pattern character string is input by a user at an input location of the input mask, and
the pattern character string is transmitted to an output storage location allocated to the input location.

24. Method as claimed in Claim 23, **characterised in that** in the configuration mode the conversion device is connected to a further data processing unit,
that the pattern character string is input into an input mask displayed on the display device of the further data processing unit under the control of a program running on the further data processing unit,
and that the pattern character string is transmitted together with other output data from the further data processing unit into the output memory of the conversion device.

## Revendications

1. Procédé de saisie et de lecture sélectives d'au moins une chaîne de caractères dans un flux primaire de signaux de sortie d'un dispositif de traitement de l'information, dans lequel
la ou chaque chaîne de caractères est introduite dans le dispositif de traitement de l'information et incorporée au flux primaire de signaux de sortie émis à une interface de sortie du dispositif de traitement de l'information,
le nombre de caractères de la ou chaque chaîne de caractères à lire sélectivement ne dépasse pas un nombre maximal fixé, et
à chaque chaîne de caractères sont associés des signaux de commande de position qui sont insérés dans une partie fixée du flux primaire de signaux de sortie, et les signaux de commande de position peuvent amener un dispositif primaire de sortie pouvant être accouplé à l'interface de sortie à émettre la chaîne de caractères associée à une position fixée de sortie d'un support de sortie,
**caractérisé par le fait**
**qu'**un dispositif de conversion accouplé à l'interface de sortie du dispositif de traitement de l'information est mis dans un mode configuration,
**que** dans le dispositif de traitement de l'information est introduit, au lieu de la ou des chaînes de caractères à saisir sélectivement, une chaîne de caractères de marquage, chaque chaîne de caractères de marquage forme une suite unique de caractères qui n'apparaît pas dans le flux primaire de signaux de sortie émis pendant le fonctionnement normal, et le nombre de caractères de la chaîne de caractères de marquage est égal au nombre maximal de caractères de la chaîne de caractères correspondante,
**que** chaque chaîne de caractères de marquage est incorporée, avec signaux de commande de position associés, au flux primaire de signaux de sortie,
**que** le dispositif de conversion reçoit le flux primaire de signaux de sortie et recherche les chaînes de caractères de marquage, et à la détection d'une chaîne de caractères de marquage, une information de position qui caractérise l'emplacement initial de cette chaîne dans le flux primaire de signaux de sortie est tirée des signaux de commande de position associés à la chaîne de caractères de marquage et insérés dans la partie fixée et mise en mémoire dans le dispositif de conversion conjointement avec le nombre de caractères de la chaîne de caractères de marquage, et
**que** le dispositif de conversion est mis dans un mode fonctionnement dans lequel le flux primaire de signaux de sortie est reçu, une information actuelle de position est tirée des signaux de commande de position reçus, l'information actuelle de position est comparée avec chacune des informations de position mises en mémoire, et en cas de concordance de l'information actuelle de position avec une des informations de position mises en mémoire, la chaîne de caractères correspondante est lue dans le flux primaire de signaux de sortie.

2. Procédé selon la revendication 1, **caractérisé par le fait**
**que** la partie fixée du flux primaire de signaux de sortie définit une page d'un support bidimensionnel de sortie,
**que** des signaux de commande de position mis en tête de la chaîne de caractères à saisir définissent des lignes et des colonnes de la page; et la position de sortie d'un caractère de la chaîne de caractères est fixée de manière univoque par un numéro de colonne et un numéro de ligne, et
**qu'**en mode configuration, pour chaque chaîne de caractères de marquage, un numéro de colonne et un numéro de ligne sont mis en mémoire comme information de position.

3. Procédé selon la revendication 2, **caractérisé par le fait que** le numéro de ligne et le numéro de colonne mis en mémoire comme information de position correspondent à la position de sortie du premier caractère de la chaîne de caractères de marquage.

4. Procédé selon l'une des revendications 2 et 3, **caractérisé par le fait**
**qu'**en mode fonctionnement, des signaux de commande de position et des chaînes de caractères reçus sont tirés respectivement un numéro actuel de ligne et un numéro actuel de colonne comme information actuelle de position, et
**qu'**en cas de concordance de l'information actuelle de position avec l'information de position mise en mémoire, les caractères suivants sont lus dans le flux de signaux de sortie jusqu'à ce que soit le nombre maximal de caractères de la chaîne de caractères soit atteint, soit un signal de fin de chaîne de caractères soit saisi.

5. Procédé selon l'une des revendications 2 à 4, **caractérisé par le fait que** les signaux de commande de position comprennent des signaux dont le début d'une nouvelle page ou d'une nouvelle ligne est indiqué, et
que l'information actuelle de position est acquise et mise en mémoire dans un compteur de lignes pour le numéro de ligne et un compteur de colonnes pour le numéro de colonne, et le compteur de lignes est remis à zéro par un signal de commande de position indiquant le début d'une nouvelle page et le compteur de colonnes remis à zéro par des signaux de commande de position indiquant le début d'une nouvelle page ou le début d'une nouvelle ligne.

6. Procédé selon l'une des revendications 2 à 5, **caractérisé par le fait que** dans le dispositif de conversion, en mode configuration, les signaux de commande de position et les chaînes de caractères faisant partie d'une page du support de sortie sont mis en mémoire intermédiaire,
que dans les chaînes de caractères mises en mémoire intermédiaire sont recherchées les chaînes de caractères de marquage, et
que lorsque une chaîne de caractères de marquage est trouvée, des signaux de commande de position et des chaînes de caractères de la page mis en tête sont tirés le numéro de ligne à mettre en mémoire comme information de position et le numéro de colonne à mettre en mémoire.

7. Procédé selon la revendication 6, **caractérisé par le fait que** pendant que dans les parties du flux primaire de signaux de sortie mises en mémoire intermédiaire dans une première mémoire de page du dispositif de conversion sont recherchées les chaînes de caractères de marquage et que des parties mises en mémoire intermédiaire sont tirées les informations de position, les parties du flux primaire de signaux de sortie qui forment une page suivante du support de sortie sont mises en mémoire intermédiaire dans une deuxième mémoire de page.

8. Procédé selon la revendication 1, **caractérisé par le fait**
**que** pour chaque chaîne de caractères, une séquence partielle de signaux de commande de position associée de manière univoque est insérée dans la partie fixée du flux primaire de signaux de sortie, et il est alors permis au dispositif de sortie, à l'aide de la séquence partielle de signaux de commande de position, de déterminer la position de sortie de la chaîne de caractères,
**qu'**en mode configuration, la partie fixée du flux primaire de signaux de sortie est mise en mémoire intermédiaire et la séquence partielle associée à une chaîne de caractères de marquage dans la partie fixée est utilisée pour obtenir l'information de position correspondante, et
**que** la séquence partielle associée à une chaîne de caractères est utilisée en mode fonctionnement pour obtenir l'information actuelle de position.

9. Procédé selon la revendication 8, **caractérisé par le fait que** la séquence partielle est insérée dans le flux primaire de signaux de sortie dans une relation locale fixée avec la chaîne de caractères associée.

10. Procédé selon la revendication 9, **caractérisé par** le fait
que-la séquence partielle est mise directement en tête de la chaîne de caractères ou ajoutée directement à celle-ci, et
qu'une partie de la séquence partielle est mise en mémoire comme information de position.

11. Procédé selon la revendication 10, **caractérisé par le fait**
**que** la séquence partielle est mise en tête de la chaîne de caractères,
**qu'**en mode fonctionnement, les signaux de commande de position reçus sont comparés de façon continue avec chaque séquence partielle mise en mémoire, et
**qu'**en cas de détection d'une concordance, les caractères qui suivent directement la séquence partielle sont lus dans les parties mises en mémoire intermédiaire du flux primaire de signaux de sortie jusqu'à ce que le nombre maximal, associé à la séquence partielle, de caractères de la chaîne de caractères soit atteint ou que soit saisi un signal de fin de chaîne de caractères.

12. Procédé selon l'une des revendications 1 à 11, **caractérisé par le fait que** chaque chaîne de caractères de marquage a une longueur d'au moins quatre caractères et contient au moins un caractère qui représente le nombre maximal de caractères.

13. Procédé selon la revendication 12, **caractérisé par le fait que** les caractères restants de la chaîne de caractères de marquage sont identiques, mais différents des caractères de chaque autre chaîne de caractères de marquage.

14. Procédé selon la revendication 13, **caractérisé par le fait que**. les caractères restants représentent des lettres.

15. Procédé selon l'une des revendications 12 à 14, **caractérisé par le fait que** le deuxième et le troisième caractères de la chaîne de caractères de marquage représentent le nombre maximal de caractères.

16. Procédé selon l'une des revendications 1 à 15, **caractérisé par le fait**
**qu'**après la lecture de la chaîne ou des chaînes de caractères, un flux secondaire de signaux de sortie dépendant de la chaîne ou des chaînes de caractères lue(s) est transmis du dispositif de conversion à un dispositif secondaire de sortie accouplé à une interface de sortie.

17. Procédé selon la revendication 16, **caractérisé par le fait que** le flux secondaire de signaux de sortie contient des signaux qui amènent le dispositif secondaire de sortie à émettre chaque fois une suite de caractères dépendant des chaînes de caractères lues.

18. Procédé selon la revendication 17, **caractérisé par le fait que** le flux secondaire de signaux de sortie contient chacune des chaînes de caractères lues.

19. Procédé selon l'une des revendications 17 et 18, **caractérisé par le fait qu'**en mode configuration, à chaque information de position mise en mémoire est associée, outre le nombre de caractères de la chaîne de caractères de marquage, une information de sortie qui est mise en mémoire et qui définit le contenu et l'emplacement de sortie de la suite de caractères dépendant des chaînes de caractères lues.

20. Procédé selon la revendication 19, **caractérisé par le fait**
**que** le flux secondaire de signaux de sortie est formé de données de sortie mises en mémoire dans une mémoire de sortie,
**que** les chaînes de caractères lues sont écrites comme partie des données de sortie, avant la formation du flux secondaire de signaux de sortie, à des emplacements fixés de la mémoire de sortie, et
**qu'**en mode configuration, à chaque information de position mise en mémoire est associée comme information de sortie au moins une adresse d'un emplacement fixé de la mémoire de sortie.

21. Procédé selon la revendication 20, **caractérisé par le fait que** l'adresse ou chaque adresse d'un emplacement fixé de la mémoire de sortie est associée, et pour cela,
à l'emplacement ou chaque emplacement fixé de la mémoire de sortie est mise en mémoire une chaîne de caractères modèles, laquelle est dans une relation fixée avec la chaîne de caractères de marquage associée à l'information de position mise en mémoire,
après la saisie d'une chaîne de caractères de marquage, dans la mémoire de sortie sont recherchées les chaînes de caractères modèles, et
lorsqu'une chaîne de caractères modèles qui est dans la relation. fixée avec la chaîne de caractères de marquage est trouvée, l'adresse de cette chaîne de caractères modèles est mise en mémoire dans la mémoire de sortie en association avec l'information de position.

22. Procédé selon la revendication 21, **caractérisé par le fait que** la chaîne de caractères modèles et la chaîne de caractères de marquage associée représentent des suites identiques de caractères.

23. Procédé selon l'une des revendications 21 et 22, **caractérisé par le fait qu'**en mode configuration, pour la mise en mémoire de la chaîne de caractères modèles dans la mémoire de sortie,
sur un dispositif indicateur est indiqué un masque d'entrée associé au support de sortie du dispositif secondaire de sortie,
un utilisateur introduit une chaîne de caractères modèles à un emplacement d'entrée du masque d'entrée, et
la chaîne de caractères modèles est transférée à un emplacement de la mémoire de sortie associé à l'emplacement d'entrée.

24. Procédé selon la revendication 23, **caractérisé par le fait**
**qu'**en mode configuration, le dispositif de conversion est couplé à un autre dispositif de traitement de l'information,
**que** la chaîne de caractères modèles est, avec commande d'un programme se déroulant sur l'autre dispositif de traitement de l'information, introduite dans un masque d'entrée indiqué sur le dispositif indicateur de l'autre dispositif de traitement de l'information, et
**que** la chaîne de caractères modèles est, conjointement avec d'autres données de sortie, transmise de l'autre dispositif de traitement de l'information à la mémoire de sortie du dispositif de conversion.
